# EUROPEAN PATENT APPLICATION

(11) **EP 4 671 741 A1**
(43) Date of publication of application: **31.12.2025**
(21) Application number: 24925392.3
(22) Date of filing: 22.05.2024
(51) Int. Cl.: G01N 21/88, G06T 7/00, H01M 10/42

(54) **DEFECT DETECTION METHOD, DEFECT DETECTION SYSTEM AND APPARATUS, DEVICE, AND STORAGE MEDIUM**

(30) Priority: 23.02.2024 CN 202410201227
(71) Applicant: Contemporary Amperex Technology Co., Limited, Ningde, Fujian 352100 (CN)
(72) Inventor: XU, Deming, Ningde, Fujian 352100 (CN); HUANG, Shumao, Ningde, Fujian 352100 (CN); CHEN, Yupei, Ningde, Fujian 352100 (CN); HUANG, Wenfang, Ningde, Fujian 352100 (CN); MENG, Pengfei, Ningde, Fujian 352100 (CN)
(74) Representative: Gong, Jinping
(86) International application number: PCT/CN2024/094769
(87) International publication number: WO 2025/175648

(57) **Abstract**

The present application relates to a defect detection method, a defect detection system, a defect detection apparatus, a device, and a storage medium. The method includes: obtaining a first cell picture of a to-be-detected cell before adhesive pasting and a second cell picture of the to-be-detected cell after adhesive pasting; determining a size of a cell detection region in the first cell picture according to a type of a to-be-detected defect and related parameters of the to-be-detected cell, and determining a position of the cell detection region in the first cell picture according to the size of the cell detection region and the related parameters of the to-be-detected cell; determining a size of a blue adhesive detection region in the second cell picture according to the type of the to-be-detected defect and the related parameters of the to-be-detected cell, and determining a position of the blue adhesive detection region in the second cell picture according to the size of the blue adhesive detection region and the related parameters of the to-be-detected cell; and performing defect detection on the electrical detection region and the blue adhesive detection region to obtain a detection result. The foregoing method can improve defect detection accuracy to some extent.

## Description

### CROSS-REFERENCE TO RELATED APPLICATIONS

The present application claims priority to Chinese Patent Application No. 2024102012276, filed on February 23, 2024 and entitled "DEFECT DETECTION METHOD, DEFECT DETECTION SYSTEM, DEFECT DETECTION APPARATUS, DEVICE, AND STORAGE MEDIUM", which is incorporated herein by reference in its entirety.

### TECHNICAL FIELD

The present application relates to the field of visual detection of lithium battery technologies, and in particular, to a defect detection method, a defect detection system, a defect detection apparatus, a device, and a storage medium.

### BACKGROUND

Currently, in a production process of a lithium battery, due to a manufacturing process and device of the lithium battery, the lithium battery has some defects. Especially, ultrasonic tab welding needs to be performed after bare cells in the lithium battery are paired. Various tab defects exist in a welded tab region, such as a welding mark quantity defect, a tab folding defect, and a blue adhesive coverage defect. The tab defects may cause a problem of overcurrent and a high tab insertion risk, and become existing necessary detection items for detecting the lithium battery.

In the related technology, usually, after ultrasonic tab welding and blue adhesive pasting are performed on a cell, detection of various types of defects in a tab region is performed.

However, the foregoing defect detection method has a problem of low detection accuracy. Therefore, quality and safety of the cell are severely affected.

### SUMMARY

In view of this, for the foregoing technical problem, it is necessary to provide a defect detection method, a defect detection system, a defect detection apparatus, a device, and a storage medium that can improve detection accuracy.

According to a first aspect, the present application provides a defect detection method. The method includes:
obtaining a first cell picture of a to-be-detected cell before adhesive pasting and a second cell picture of the to-be-detected cell after adhesive pasting, where the first cell picture includes a tab of the to-be-detected cell;
determining a cell detection region in the first cell picture and a blue adhesive detection region in the second cell picture according to a type of a to-be-detected defect; and
performing defect detection on the cell detection region and the blue adhesive detection region to obtain a detection result.

According to the defect detection method in this embodiment of the present application, the first cell picture of the to-be-detected cell before adhesive pasting and the second cell picture of the to-be-detected cell after adhesive pasting are obtained; the cell detection region in the first cell picture and the blue adhesive detection region in the second cell picture are determined according to the type of the to-be-detected defect; and defect detection is performed on the electrical detection region and the blue adhesive detection region to obtain the detection result. According to the foregoing defect detection method, defect detection is performed on the to-be-detected cell after ultrasonic tab welding is performed on the to-be-detected cell and before adhesive pasting is performed on the to-be-detected cell. Compared with conventional defect detection performed after a blue adhesive is pasted after ultrasonic welding, the foregoing method can remove interference such as a color of the blue adhesive and reflection during defect identification to some extent, and can improve defect detection accuracy to some extent. In addition, the foregoing defect detection method further provides detection of a blue adhesive presence or absence defect, a blue adhesive offset defect, and a blue adhesive tab exposure defect on the welded cell, and can improve detection accuracy and efficiency to some extent by quickly positioning the blue adhesive detection region. In some embodiments, in the foregoing method, the cell detection region and the blue adhesive detection region are determined according to the type of the to-be-detected defect, that is, different types of to-be-detected defects correspond to different cell detection regions and different blue adhesive detection regions. Therefore, the foregoing method can detect a plurality of types of defects.

In one of the embodiments, the determining a cell detection region in the first cell picture and a blue adhesive detection region in the second cell picture according to a type of a to-be-detected defect includes:
determining the cell detection region in the first cell picture and the blue adhesive detection region in the second cell picture according to the type of the to-be-detected defect and related parameters of the to-be-detected cell.

According to the detection method in this embodiment of the present application, corresponding cell detection regions and blue adhesive detection regions are determined according to different types of to-be-detected defects, so that detection of different types of defects can be performed, thereby improving detection comprehensiveness to some extent.

In one of the embodiments, the determining the cell detection region in the first cell picture and the blue adhesive detection region in the second cell picture according to the type of the to-be-detected defect and related parameters of the to-be-detected cell includes:
determining a size of a cell detection region in the first cell picture according to a type of a to-be-detected defect and related parameters of the to-be-detected cell;
determining a size of a blue adhesive detection region in the second cell picture according to the type of the to-be-detected defect and the related parameters of the to-be-detected cell;
determining a position of the cell detection region in the first cell picture according to the size of the cell detection region and the related parameters of the to-be-detected cell; and
determining a position of the blue adhesive detection region in the second cell picture according to the size of the blue adhesive detection region and the related parameters of the to-be-detected cell.

According to the method in this embodiment of the present application, a size and a position of a cell detection region and a size and a position of a blue adhesive detection region are determined according to a type of a to-be-detected defect, which can improve accuracy of determining the cell detection region and the blue adhesive detection region to some extent, thereby improving accuracy of detecting a defect.

In one of the embodiments, the determining a size of a detection region in the first cell picture according to a type of a to-be-detected defect and related parameters of the to-be-detected cell includes:
determining that the cell detection region is an eversion region if the type of the to-be-detected defect is a tab eversion defect, and determining a size of the eversion region according to size parameters of the tab of the to-be-detected cell, size parameters of an adapting piece of the to-be-detected cell, and size parameters of a welding mark of the adapting piece of the to-be-detected cell;
determining that the cell detection region is a folding region if the type of the to-be-detected defect is a tab folding defect, and determining a size of the folding region according to size parameters of the tab of the to-be-detected cell and size parameters of an adapting piece of the to-be-detected cell; or
determining that the cell detection region is a welding mark detection region if the type of the detection defect is a welding mark defect, and determining a size of the welding mark detection region according to size parameters of a welding mark on an adapting piece of the to-be-detected cell.

According to the method in this embodiment of the present application, by determining the size of the eversion region corresponding to the type of the tab eversion defect, determining the size of the folding region corresponding to the type of the tab folding defect, or determining the size of the welding mark detection region corresponding to the type of the welding mark defect, the tab eversion defect, the tab folding defect, or the welding mark defect may be detected.

In one of the embodiments, the eversion region includes a first detection region and a second detection region, and the determining a size of the eversion region according to size parameters of the tab of the to-be-detected cell, size parameters of an adapting piece of the to-be-detected cell, and size parameters of a welding mark of the adapting piece of the to-be-detected cell includes:
determining a size of the first detection region according to the size parameters of the tab of the to-be-detected cell and the size parameters of the adapting piece; and
determining a size of the second detection region according to the size parameters of the welding mark of the adapting piece of the to-be-detected cell.

According to the method in this embodiment of the present application, by determining the sizes of the first detection region and the second detection region in the eversion region corresponding to the type of the tab eversion defect, a white eversion defect and a black eversion defect in the tab eversion defect may be detected.

In one of the embodiments, the determining a size of the first detection region according to the size parameters of the tab of the to-be-detected cell and the size parameters of the adapting piece includes:
determining the size of the first detection region according to a length of the tab of the to-be-detected cell and a width of a gap between the adapting piece and the to-be-detected cell.

According to the method in this embodiment of the present application, by determining the size of the first detection region in the eversion region corresponding to the type of the tab eversion defect, a white eversion defect in the tab eversion defect may be detected.

In one of the embodiments, the determining a size of the second detection region according to the size parameters of the welding mark of the adapting piece of the to-be-detected cell includes:
determining the size of the second detection region according to a length and a width of the welding mark of the adapting piece of the to-be-detected cell.

According to the method in this embodiment of the present application, by determining the size of the second detection region in the eversion region corresponding to the type of the tab eversion defect, a black eversion defect in the tab eversion defect may be detected.

In one of the embodiments, the determining a size of the folding region according to size parameters of the tab of the to-be-detected cell and size parameters of an adapting piece of the to-be-detected cell includes:
determining the size of the folding region according to a length of the tab of the to-be-detected cell and a width of a gap between the adapting piece and the to-be-detected cell.

According to the method in this embodiment of the present application, by determining the size of the folding region corresponding to the type of the tab folding defect, the tab folding defect may be detected.

In one of the embodiments, the determining a position of the cell detection region in the first cell picture according to the size of the detection region and the related parameters of the to-be-detected cell includes:
positioning the cell detection region in the first cell picture according to a position of an intersection point of a first side and a second side and with reference to the size of the cell detection region, to determine the position of the cell detection region in the first cell picture, where the first side and the second side are two intersecting sides of the adapting piece in the first cell picture.

According to the detection method in this embodiment of the present application, the cell detection region is positioned through side grabbing, which is simple and efficient in implementation, and can improve efficiency of positioning the cell detection region to some extent, thereby improving detection efficiency.

In one of the embodiments, the determining a size of a blue adhesive detection region in the second cell picture according to the type of the to-be-detected defect and the related parameters of the to-be-detected cell includes:
determining that the blue adhesive detection region is an adhesive pasting region if the type of the to-be-detected defect is a blue adhesive presence or absence defect, and determining a size of the adhesive pasting region according to size parameters of a welding mark of an adapting piece of the to-be-detected cell;
determining that the blue adhesive detection region is a welding pad region if the type of the to-be-detected defect is a blue adhesive offset defect or an adapting piece polarity defect, and determining a size of the welding pad region according to size parameters of a welding pad of an adapting piece of the to-be-detected cell; or
determining that the blue adhesive detection region is a tab periphery region if the type of the to-be-detected defect is a tab exposure defect, and determining a size of the tab periphery region according to size parameters of a welding pad of an adapting piece of the to-be-detected cell and a position of the welding pad.

According to the method in this embodiment of the present application, by determining the size of the adhesive pasting region, determining the size of the welding pad region, or determining the size of the tab periphery region, the blue adhesive presence or absence defect, the tab folding defect, the blue adhesive offset defect, the adapting piece polarity defect, or the tab exposure defect may be detected.

In one of the embodiments, the determining a size of the adhesive pasting region according to size parameters of a welding mark of an adapting piece of the to-be-detected cell includes:
determining the size of the adhesive pasting region according to a length of a region in which the welding mark of the adapting piece is located and a width of the region in which the welding mark of the adapting piece is located.

According to the method in this embodiment of the present application, by determining the size of the adhesive pasting region corresponding to the type of the blue adhesive presence or absence defect, the blue adhesive presence or absence defect may be detected.

In one of the embodiments, the determining a position of the blue adhesive detection region in the second cell picture according to the size of the blue adhesive detection region and the related parameters of the to-be-detected cell includes:
positioning the adhesive pasting region in the second cell picture according to a position of an intersection point of a third side and a fourth side and with reference to the size of the adhesive pasting region, to determine a position of the adhesive pasting region in the second cell picture, where the third side and the fourth side are two intersecting sides of the adapting piece in the second cell picture;
or determining a position of the adhesive pasting region in the second cell picture according to a position of the region in which the welding mark of the to-be-detected cell is located.

According to the detection method in this embodiment of the present application, the adhesive pasting region is positioned through side grabbing, which is simple and efficient in implementation, and can improve efficiency of positioning the adhesive pasting region to some extent, thereby improving detection efficiency.

In one of the embodiments, the determining a size of the welding pad region according to size parameters of a welding pad of an adapting piece of the to-be-detected cell includes:
determining a protrusion region or a pit region of the welding pad of the adapting piece of the to-be-detected cell; and
determining the size of the welding pad region according to a diameter of the protrusion region or the pit region if the protrusion region or the pit region is a circular region; or
determining the size of the welding pad region according to a length of the protrusion region or the pit region and a width of the protrusion region or the pit region if the protrusion region or the pit region is a rectangular region.

According to the method in this embodiment of the present application, by determining the size of the welding pad region corresponding to the type of the blue adhesive offset defect or the adapting piece polarity defect, the blue adhesive offset defect or the adapting piece polarity defect may be detected.

In one of the embodiments, the determining a size of the welding pad region according to size parameters of a welding pad of an adapting piece of the to-be-detected cell includes:
determining the size of the welding pad region according to a length of a region in which the welding pad of the adapting piece of the to-be-detected cell is located and a width of the region in which the welding pad of the adapting piece is located;
or determining the size of the welding pad region according to size parameters of a protrusion region or a pit region of the welding pad of the adapting piece.

According to the method in this embodiment of the present application, by determining the size of the welding pad region corresponding to the type of the blue adhesive offset defect or the adapting piece polarity defect, the blue adhesive offset defect or the adapting piece polarity defect may be detected.

In one of the embodiments, the determining a position of the blue adhesive detection region in the second cell picture according to the size of the blue adhesive detection region and the related parameters of the to-be-detected cell includes:
positioning the welding pad region in the second cell picture according to a position of the welding pad of the adapting piece of the to-be-detected cell and with reference to the size of the welding pad region, to determine a position of the welding pad region in the second cell picture.

According to the detection method in this embodiment of the present application, the welding pad region is positioned by identifying the welding pad, which is simple and efficient in implementation, and can improve efficiency of positioning the welding pad region to some extent, thereby improving detection efficiency.

In one of the embodiments, the determining a size of the tab periphery region according to size parameters of a welding pad of an adapting piece of the to-be-detected cell and a position of the welding pad includes:
determining the size of the tab periphery region according to a length of a region in which the welding pad of the adapting piece of the to-be-detected cell is located and a distance between the welding pad and the to-be-detected cell.

According to the method in this embodiment of the present application, by determining the size of the tab periphery region corresponding to the type of the tab exposure defect, the tab exposure defect may be detected.

In one of the embodiments, the tab periphery region includes a first periphery region of a first tab, a second periphery region of the first tab, a first periphery region of a second tab, and a second periphery region of the second tab, and the determining the size of the tab periphery region according to a length of a region in which the welding pad of the adapting piece of the to-be-detected cell is located and a distance between the welding pad and the to-be-detected cell includes:
determining a length of the first periphery region of the first tab, a length of the second periphery region of the first tab, a length of the first periphery region of the second tab, and a length of the second periphery region of the second tab according to the length of the region in which the welding pad of the adapting piece of the to-be-detected cell is located;
determining a width of the first periphery region of the first tab and a width of the second periphery region of the first tab according to a first distance between the welding pad and the to-be-detected cell; and
determining a width of the first periphery region of the second tab and a width of the second periphery region of the second tab according to a second distance between the welding pad and the to-be-detected cell.

According to the method in this embodiment of the present application, the size of the tab periphery region is determined, and the tab periphery region substantially covers all regions in which the tab may be exposed, so that the tab exposure defect may be detected.

In one of the embodiments, the determining a position of the blue adhesive detection region in the second cell picture according to the size of the blue adhesive detection region and the related parameters of the to-be-detected cell includes:
positioning the first periphery region of the first tab in the second cell picture according to a position of an intersection point of a fifth side and a sixth side and with reference to a size of the first periphery region of the first tab, to determine a position of the first periphery region of the first tab, where the fifth side and the sixth side are two intersecting sides of the adapting piece in the second cell picture;
determining a position of the second periphery region of the first tab according to a length of a first blue adhesive in the to-be-detected cell and with reference to the position of the first periphery region of the first tab;
positioning the first periphery region of the second tab in the second cell picture according to a position of an intersection point of a seventh side and an eighth side and with reference to a size of the first periphery region of the second tab, to determine a position of the first periphery region of the second tab, where the seventh side and the eighth side are two intersecting sides of the adapting piece in the second cell picture; and
determining a position of the second periphery region of the second tab according to a length of a second blue adhesive in the to-be-detected cell and with reference to the position of the first periphery region of the second tab.

According to the detection method in this embodiment of the present application, the first periphery region of the first tab, the second periphery region of the first tab, the first periphery region of the second tab, and the second periphery region of the second tab are positioned through side grabbing, which is simple and efficient in implementation, and can improve efficiency of positioning the tab periphery region to some extent, thereby improving detection efficiency.

In one of the embodiments, the detection result includes a first detection result and a second detection result, and the performing defect detection on the cell detection region and the blue adhesive detection region to obtain a detection result includes:
performing detection of a first defect in the cell detection region, to obtain the first detection result, where the first defect includes one of a tab eversion defect, a tab folding defect, a tab cracking defect, and a welding mark defect; and
performing detection of a second defect in the blue adhesive detection region, to obtain the second detection result, where the second defect includes one of a blue adhesive presence or absence defect, a blue adhesive offset defect, an adapting piece polarity defect, and a tab exposure defect.

According to the method in this embodiment of the present application, a series of defect detection on the to-be-detected cell before adhesive pasting and a series of defect detection on the to-be-detected cell after adhesive pasting are implemented, which is clear in division of work, and can implement comprehensive detection on the to-be-detected cell.

In one of the embodiments, the cell detection region includes a tab folding detection region, the tab folding detection region includes an eversion region, the eversion region includes a first cell detection region and a second cell detection region, and the performing detection of a first defect in the cell detection region, to obtain the first detection result includes:
performing binarization processing on a picture of the first cell detection region and a picture of the second cell detection region, to obtain a processed first processing picture and a processed second processing picture;
performing detection of a first type of defect in the tab eversion defect on the first processing picture, to obtain an intermediate detection result; and
determining, if the intermediate detection result indicates that the first type of defect is detected, that the first detection result indicates that the to-be-detected cell has the first type of defect; or
performing detection of a second type of defect in the tab eversion defect on the second processing picture if the intermediate detection result indicates that the first type of defect is not detected, to obtain the first detection result.

According to the detection method in this embodiment of the present application, a tab white eversion defect and a tab black eversion defect may be detected, and a cell detection region corresponding to the tab white eversion defect is different from a detection region corresponding to the tab black eversion defect. Therefore, detection of the cell detection region corresponding to the tab white eversion defect is first performed, and in a scenario in which the tab white eversion defect is not detected, detection of the cell detection region corresponding to the tab black eversion defect is then performed, which can improve detection efficiency to some extent.

In one of the embodiments, the performing detection of a first type of defect in the tab eversion defect on the first processing picture, to obtain an intermediate detection result includes:
determining whether a cell detection region of the first processing picture includes a pixel whose grayscale value is within a first grayscale threshold range; and determining that the intermediate detection result indicates that the first type of defect is detected if the cell detection region includes a pixel whose grayscale value is within the first grayscale threshold range; or determining that the intermediate detection result indicates that the first type of defect is not detected if the cell detection region does not include a pixel whose grayscale value is within the first grayscale threshold range.

According to the detection method in this embodiment of the present application, the white eversion defect is detected by setting the first grayscale threshold range corresponding to the tab white eversion defect. The method is easy to implement, and can improve detection efficiency to some extent.

In one of the embodiments, the performing detection of a second type of defect in the tab eversion defect on the second processing picture, to obtain the first detection result includes:
determining whether a cell detection region of the second processing picture includes a pixel whose grayscale value is within a second grayscale threshold range; and determining that the first detection result indicates that the to-be-detected cell has the second type of defect if the cell detection region includes a pixel whose grayscale value is within the second grayscale threshold range; or determining that the first detection result indicates that the to-be-detected cell does not have the second type of defect if the cell detection region does not include a pixel whose grayscale value is within the second grayscale threshold range.

According to the detection method in this embodiment of the present application, the black eversion defect is detected by setting the second grayscale threshold range corresponding to the tab black eversion defect. The method is easy to implement, and can improve detection efficiency to some extent.

In one of the embodiments, the detection region includes a tab folding detection region, the tab folding detection region includes a folding region, and the performing detection of a first defect in the cell detection region, to obtain the first detection result includes:
performing binarization processing on a picture of the folding region, to obtain a processed third processing picture; and
performing detection of the tab folding defect on the third processing picture, to obtain the first detection result.

According to the detection method in this embodiment of the present application, a method for detecting whether a tab of an adapting piece on a cell is covered with an adhesive pasting region is implemented. Compared with a conventional tab detection method, a new detection item is added, so that a yield of a product can be improved.

In one of the embodiments, the cell detection region includes a tab blocking detection region, and the performing detection of a first defect in the cell detection region, to obtain the first detection result includes:
inputting a picture of the tab blocking detection region into a preset detection model to detect the tab cracking defect, to obtain the first detection result, where the first detection result includes a tab cracking confidence degree.

The embodiments of the present application provide a method for detecting a back tab cracking defect. In addition, a tab blocking detection region is quickly positioned, and detection is implemented by using a trained deep learning model, so that detection accuracy and efficiency can be improved to some extent.

In one of the embodiments, the cell detection region includes a welding mark detection region, and the performing detection of a first defect in the detection region, to obtain the first detection result includes:
performing detection of spots in the cell detection region, to determine the spots in the cell detection region; and
performing defect detection on the cell detection region according to a quantity and an area of pixels occupied by each of the spots, to obtain the first detection result, where the first detection result includes a quantity of welding points included in the cell detection region and a welding mark area.

The embodiments of the present application provide a method for detecting a welding mark defect. In addition, a welding mark detection region is quickly positioned, and detection is implemented by using a trained deep learning model, so that detection accuracy and efficiency can be improved to some extent.

In one of the embodiments, the blue adhesive detection region includes an adhesive pasting region, the second defect includes the blue adhesive presence or absence defect, and the performing detection of a second defect in the blue adhesive detection region, to obtain the second detection result includes:
determining whether pixel values of all pixels within the blue adhesive detection region are all greater than a first preset pixel threshold; and
determining, if the pixel values of all the pixels in the blue adhesive detection region are all greater than the first preset pixel threshold, that the second detection result indicates that a blue adhesive is pasted to an adapting piece in the second cell picture; or
determining, if none of the pixel values of all the pixels in the blue adhesive detection region is greater than the first preset pixel threshold, that the second detection result indicates that a blue adhesive is not pasted to an adapting piece in the second cell picture.

This embodiment of the present application provides detection of a blue adhesive presence or absence defect on the welded cell, and can improve detection accuracy and efficiency to some extent by quickly positioning the blue adhesive detection region.

In one of the embodiments, the blue adhesive detection region includes a welding pad region, the second defect includes the blue adhesive offset defect, and the performing detection of a second defect in the blue adhesive detection region, to obtain the second detection result includes:
determining whether a pixel whose pixel value is greater than a second preset pixel threshold exists in the welding pad region; and
determining, if a pixel whose pixel value is greater than the second preset pixel threshold exists in the welding pad region, that the second detection result indicates that a blue adhesive pasted to an adapting piece in the second cell picture has an offset defect; or
determining, if a pixel whose pixel value is greater than the second preset pixel threshold does not exist in the welding pad region, that the second detection result indicates that a blue adhesive pasted to an adapting piece in the second cell picture does not have an offset defect.

This embodiment of the present application provides detection of a blue adhesive offset defect on the welded cell, and in particular, detection of whether a blue adhesive offset exists in the welding pad region, which can improve cell detection safety to some extent.

In one of the embodiments, the blue adhesive detection region includes a welding pad region, the second defect includes the adapting piece polarity defect, and the performing detection of a second defect in the blue adhesive detection region, to obtain the second detection result includes:
determining a first color value and a second color value of the welding pad region in the second cell picture;
determining a polarity of an adapting piece in the second cell picture according to a difference between the first color value and the second color value; and
determining the second detection result according to the polarity of the adapting piece in the second cell picture, where the second detection result indicates whether the polarity of the adapting piece in the second cell picture is reversed.

This embodiment of the present application provides detection of a welding pad polarity defect on the welded cell, and in particular, detection of whether the polarity of the welding pad has a reversed polarity defect, which can improve cell detection safety to some extent.

In one of the embodiments, the blue adhesive detection region includes a tab periphery region, the second defect includes the tab exposure defect, and the performing detection of a second defect in the blue adhesive detection region, to obtain the second detection result includes:
determining whether the tab periphery region in the second cell picture includes regions whose grayscale difference is greater than a preset grayscale threshold; and
determining, if the tab periphery region in the second cell picture includes regions whose grayscale difference is greater than the preset grayscale threshold, that the second detection result indicates that a blue adhesive pasted to an adapting piece in the second cell picture has the tab exposure defect; or
determining, if the tab periphery region in the second cell picture does not include regions whose grayscale difference is greater than the preset grayscale threshold, that the second detection result indicates that a blue adhesive pasted to an adapting piece in the second cell picture does not have the tab exposure defect.

This embodiment of the present application provides detection of a tab exposure defect on the welded cell, which can improve cell detection comprehensiveness to some extent.

According to a second aspect, the present application further provides a defect detection system. The system includes: a control device, a camera, a driving device, a welding device, and an adhesive pasting device, where the control device is separately connected to the camera, the driving device, the welding device, and the adhesive pasting device; and the control device is configured to perform the defect detection method according to the first aspect.

According to a third aspect, the present application further provides a defect detection apparatus. The apparatus includes:
an obtaining module, configured to obtain a first cell picture of a to-be-detected cell before adhesive pasting and a second cell picture of the to-be-detected cell after adhesive pasting, where the first cell picture includes a tab of the to-be-detected cell;
a determining module, configured to: determine a cell detection region in the first cell picture and a blue adhesive detection region in the second cell picture according to a type of a to-be-detected defect; and
a detection module, configured to perform defect detection on the cell detection region and the blue adhesive detection region to obtain a detection result.

According to a fourth aspect, the present application further provides a computer device. The computer device includes a memory and a processor, where the memory has a computer program stored therein, and the processor, when executing the computer program, implements the defect detection method according to the first aspect.

According to a fifth aspect, the present application further provides a computer-readable storage medium. The computer-readable storage medium has a computer program stored therein, where the computer program, when executed by a processor, implements the computer program, implements the defect detection method according to the first aspect.

The above description only refers to an overview of the technical solution of the present application. In order to understand the technical means of the present application more clearly, it can be implemented according to the content of the description. In order to make the above-mentioned and other purposes, features and advantages of the present application more apparent, the specific implementations of the present application are listed below.

### BRIEF DESCRIPTION OF THE DRAWINGS

In order to provide a clearer explanation of the technical solution of the embodiments of the present application, a brief introduction will be given to the accompanying drawings required in the embodiments of the present application. It is evident that the accompanying drawings described below are only some embodiments of the present application. For ordinary technical personnel in the art, other accompanying drawings can be obtained based on the drawings without any creative effort. In the accompanying drawings:
FIG. 1 is a schematic diagram of a structure of a detection system according to an embodiment;
FIG. 2 is a schematic flowchart of a defect detection method according to an embodiment;
FIG. 3 is a schematic diagram of a cell picture according to an embodiment;
FIG. 4 is a schematic diagram of a cell picture according to another embodiment;
FIG. 5 is a schematic flowchart of a defect detection method according to another embodiment;
FIG. 6 is a schematic flowchart of a defect detection method according to another embodiment;
FIG. 7 is a schematic flowchart of a defect detection method according to another embodiment;
FIG. 8 is a schematic diagram of a cell picture according to another embodiment;
FIG. 9 is a schematic diagram of a cell picture according to another embodiment;
FIG. 10 is a schematic diagram of a cell picture according to another embodiment;
FIG. 11 is a schematic diagram of a cell picture according to another embodiment;
FIG. 12 is a schematic flowchart of a defect detection method according to another embodiment;
FIG. 13 is a schematic diagram of a cell picture according to another embodiment;
FIG. 14 is a schematic diagram of a cell picture according to another embodiment;
FIG. 15 is a schematic flowchart of a defect detection method according to another embodiment;
FIG. 16 is a schematic diagram of a cell picture according to another embodiment;
FIG. 17 is a schematic diagram of a cell picture according to another embodiment;
FIG. 18 is a schematic flowchart of a defect detection method according to another embodiment;
FIG. 19 is a schematic diagram of a cell picture according to another embodiment;
FIG. 20 is a schematic flowchart of a defect detection method according to another embodiment;
FIG. 21 is a schematic flowchart of a defect detection method according to another embodiment;
FIG. 22 is a schematic flowchart of a defect detection method according to another embodiment;
FIG. 23 is a schematic flowchart of a defect detection method according to another embodiment;
FIG. 24 is a schematic diagram of a cell picture according to another embodiment;
FIG. 25 is a schematic flowchart of a defect detection method according to another embodiment;
FIG. 26 is a schematic flowchart of a defect detection method according to another embodiment;
FIG. 27 is a schematic flowchart of a defect detection method according to another embodiment;
FIG. 28 is a schematic flowchart of a defect detection method according to another embodiment;
FIG. 29 is a schematic flowchart of a defect detection method according to another embodiment;
FIG. 30 is a block diagram of a structure of a defect detection system according to an embodiment;
FIG. 31 is a schematic diagram of a structure of a defect detection apparatus according to an embodiment; and
FIG. 32 is a diagram of an internal structure of a computer device according to an embodiment.

### DETAILED DESCRIPTION

To make the objectives, technical solutions, and advantages of the present application clearer, the following further describes the present application in detail with reference to the accompanying drawings and embodiments. Specific embodiments described herein are merely used to explain the present application but are not intended to limit the present application.

Unless otherwise defined, all technical and scientific terms used herein have the same meaning as commonly understood by those skilled in the technical filed to which the present application belongs. The terminology used herein is for the purpose of describing particular embodiments only and is not intended to limit the present application. The terms "including" and "having" and any variations thereof in the description and claims of the present application and the above description of the accompanying drawings are intended to cover non-exclusive inclusions.

In the description according to the embodiments of the present application, the technical terms "first", "second", and the like are only used to distinguish different objects, and should not be understood as indicating or implying relative importance or implying the number, specific order or primary and secondary relationship of indicated technical features. In the description according to the embodiments of the present application, "a plurality of" means two or more, unless otherwise expressly and specifically defined.

Reference herein to an "embodiment" means that a specific feature, structure, or characteristic described in connection with the embodiment can be included in at least one embodiment of the present application. The appearances of the phrase in various places in the specification are not necessarily all referring to the same embodiment, nor a separate or alternative embodiment that is mutually exclusive of other embodiments. It shall be explicitly and implicitly understood by those skilled in the art that the embodiments described herein may be combined with other embodiments.

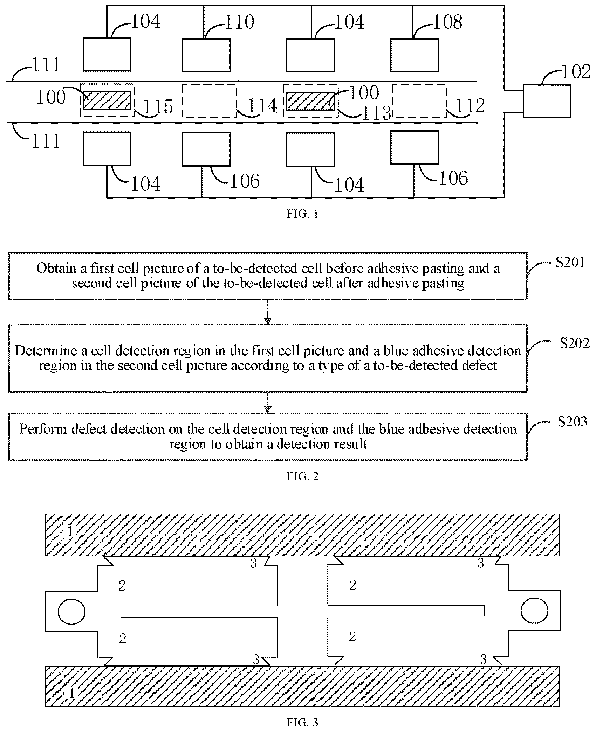

A defect detection method provided in the embodiments of the present application may be applied to a detection system shown in FIG. 1. The detection system includes a control device 102, a camera 104, a driving device 106, a welding device 108, and an adhesive pasting device 110. The control device 102 is separately connected to the camera 104, the driving device 106, the welding device 108, and the adhesive pasting device 110. The camera 104 may be divided into an upper camera and a lower camera. When the detection system is used to perform defect detection on a to-be-detected cell, after the control device 102 controls the welding device 108 to perform ultrasonic tab welding on the to-be-detected cell 100 at a welding station 112 of a production line 111, the control device 102 controls the driving device 106 to drive the to-be-detected cell 100 to move to a first detection station 113 on the production line 111, and controls the camera 104 to capture a picture of the to-be-detected cell 100 at the first detection station 113, and the detection system performs related defect detection (for example, a tab eversion defect, a tab folding defect, or a welding mark defect) based on the picture of the to-be-detected cell 100. Then, the control device 102 controls the driving device 106 to drive the to-be-detected cell 100 to move to an adhesive pasting station 114 on the production line 111, and controls the adhesive pasting device 110 to perform adhesive pasting on the to-be-detected cell 100. After adhesive pasting, the control device 102 controls the driving device 106 to drive the to-be-detected cell 100 to move to a second detection station 115, and controls the camera 104 to capture a picture of the to-be-detected cell at the second detection station 115, and the detection system performs perform related defect detection (for example, any one of a blue adhesive presence or absence defect, a blue adhesive offset defect, an adapting piece polarity defect, and a tab exposure defect) based on the picture of the to-be-detected cell 100. The control device 102 may be a programmable logic controller (PLC), may be an integrated circuit chip, or may be, but is not limited to, a personal computer, a notebook computer, a smartphone, a tablet computer, a server, or the like.

A person skilled in the art may understand that, the structure shown in FIG. 1 is merely a block diagram of a partial structure related to a solution in the present application, and does not constitute a limitation to the computer device to which the solution in the present application is applied. Specifically, the computer device may include more components or fewer components than those shown in the figure, or some components may be combined, or a different component deployment may be used.

In an embodiment, as shown in FIG. 2, a defect detection method is provided. An example in which the method is applied to the control device in FIG. 1 is used for description, and the method includes the following steps:
S201: Obtain a first cell picture of a to-be-detected cell before adhesive pasting and a second cell picture of the to-be-detected cell after adhesive pasting.

The first cell picture includes a tab of the to-be-detected cell, and the second cell picture includes the tab of the to-be-detected cell and a blue adhesive pasted on the to-be-detected cell and an adapting piece.

In this embodiment of the present application, after controlling the welding device to perform ultrasonic tab welding on the to-be-detected cell, the control device may control the driving device to move the welded to-be-detected cell to the first detection station, and trigger the camera with a signal to photograph, so that the camera captures a first cell picture of the to-be-detected cell after welding and before adhesive pasting. The first cell picture includes a welded tab, the to-be-detected cell, and an adapting piece of the to-be-detected cell. For example, referring to a schematic diagram of a first cell picture shown in FIG. 3, a region marked by 1 indicates a to-be-detected cell, a region marked by 2 indicates an adapting piece, and a region marked by 3 indicates a tab. It should be noted that FIG. 3 is a schematic diagram of two adapting pieces of different polarities. An adapting piece of an aluminum electrode is shown on the left, and an adapting piece of a copper electrode is shown on the right.

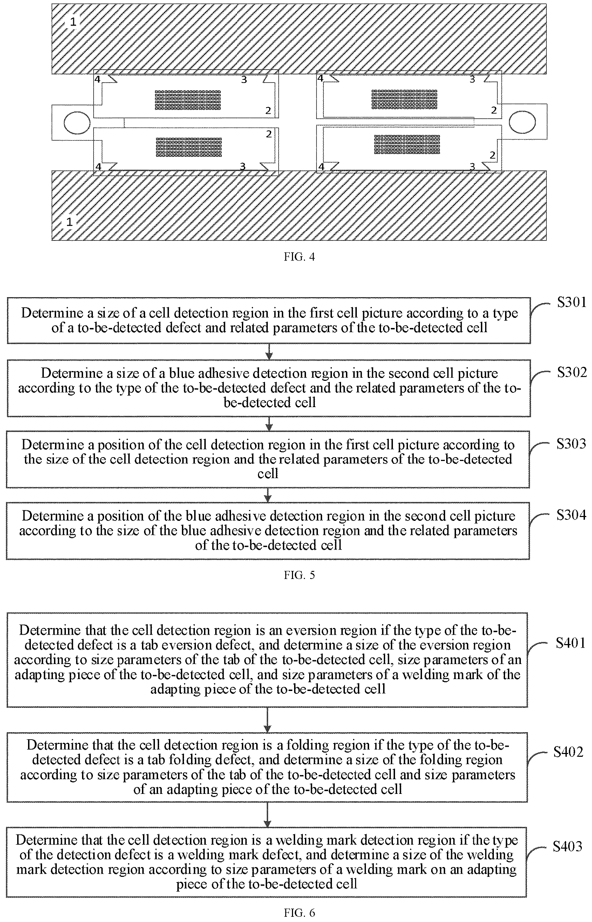

After controlling the camera to capture a first cell picture of the to-be-detected cell before adhesive pasting, the control device may further control the driving device to move the to-be-detected cell after adhesive pasting to a second detection station, and trigger the camera with a signal to photograph, so that the camera captures a second cell picture of the to-be-detected cell after welding and after adhesive pasting. The second cell picture includes a welded tab, the to-be-detected cell, an adapting piece of the to-be-detected cell, and a blue adhesive. For example, referring to a schematic diagram of a second cell picture shown in FIG. 4, a region marked by 1 indicates a to-be-detected cell, a region marked by 2 indicates an adapting piece, a region marked by 3 indicates a tab, and a region marked by 4 indicates a blue adhesive.

S202: Determine a cell detection region in the first cell picture and a blue adhesive detection region in the second cell picture according to a type of a to-be-detected defect.

The cell detection region may include a tab detection region and a welding detection region. The tab detection region includes an eversion region and a folding region. The eversion region includes a first white object detection region and a first black object detection region. The folding region includes a second white object detection region and a second black object detection region. Types of to-be-detected defects include any one of a tab eversion defect, a tab folding defect, a tab cracking defect, and a welding defect. Different types of defects correspond to cell detection regions of different sizes and different positions.

In this embodiment of the present application, when obtaining the first cell picture, the control device may further determine a type of the to-be-detected defect, and if the type of the to-be-detected defect is a type of a tab eversion defect, determine a cell detection region corresponding to the type of the tab eversion defect in the first cell picture; if the type of the to-be-detected defect is a type of a tab folding defect, determine a cell detection region corresponding to the type of the tab folding defect in the first cell picture; if the type of the to-be-detected defect is a type of a tab cracking defect, determine a cell detection region corresponding to the type of the tab cracking defect in the first cell picture; or if the type of the to-be-detected defect is a type of a welding defect, determine a cell detection region corresponding to the type of the welding defect in the first cell picture. It should be noted that the cell detection regions corresponding to the foregoing defect types may be determined according to a preset correspondence between defect types and information about cell detection regions. The information about the cell detection regions includes sizes and positions of the cell detection regions.

S203: Perform defect detection on the cell detection region and the blue adhesive detection region to obtain a detection result.

The detection result may indicate whether a defect is detected. In some embodiments, the detection result may further include related attribute information of a detected defect (a type and/or a position of the defect). A detection result may be determined according to a type of a defect included in a cell detection region or a cell detection region. For example, if a cell detection region includes a tab detection region, and the tab detection region includes an eversion region, a corresponding detection result includes whether a tab eversion defect exists; if a cell detection region includes a tab detection region, and the tab detection region includes a folding region, a corresponding detection result includes whether a tab folding defect exists; if a cell detection region includes a tab detection region, and the tab detection region includes a tab blocking region, a corresponding detection result includes whether a tab cracking defect exists; or if a cell detection region includes a welding detection region, a corresponding detection result includes whether a welding defect exists, a quantity of welding points included in the welding detection region, and a welding area.

In this embodiment of the present application, when determining the cell detection region based on the foregoing steps, the control device may further extract a picture of the cell detection region in the first cell picture and perform defect detection based on the picture of the cell detection region, to obtain a detection result. Specifically, the control device may input the picture of the cell detection region into a preset detection model to perform defect detection and output a detection result; or may perform detection of the picture of the cell detection region by using another defect detection algorithm, to obtain a detection result. In some embodiments, when the control device determines the cell detection region based on the foregoing steps, the control device may perform defect detection on the cell detection region by comparing grayscale values of pixels in the cell detection region or performing a comparison based on a standard defect picture, to obtain a detection result.

When obtaining the second cell picture, the control device may further determine a type of the to-be-detected defect. If the type of the to-be-detected defect is the type of the blue adhesive defect, the control device determines a blue adhesive detection region corresponding to the type of the blue adhesive defect in the second cell picture. Specifically, the control device may determine a size and a position of the blue adhesive detection region. When determining the blue adhesive detection region based on the foregoing steps, the control device may further extract a picture of the blue adhesive detection region and perform defect detection based on the picture of the blue adhesive detection region, to obtain a detection result. Specifically, the control device may input the picture of the blue adhesive detection region into a preset detection model to perform defect detection and output a detection result; or may perform detection of the picture of the blue adhesive detection region by using another defect detection algorithm, to obtain a detection result. In some embodiments, when the control device determines the blue adhesive detection region based on the foregoing steps, the control device may perform defect detection on the blue adhesive detection region by comparing grayscale values of pixels in the blue adhesive detection region or performing a comparison based on a standard defect picture, to obtain a detection result.

According to the defect detection method in this embodiment of the present application, the first cell picture of the to-be-detected cell before adhesive pasting and the second cell picture of the to-be-detected cell after adhesive pasting are obtained; the cell detection region in the first cell picture and the blue adhesive detection region in the second cell picture are determined according to the type of the to-be-detected defect; and defect detection is performed on the electrical detection region and the blue adhesive detection region to obtain the detection result. According to the foregoing defect detection method, defect detection is performed on the to-be-detected cell after ultrasonic tab welding is performed on the to-be-detected cell and before adhesive pasting is performed on the to-be-detected cell. Compared with conventional defect detection performed after a blue adhesive is pasted after ultrasonic welding, the foregoing method can remove interference such as a color of the blue adhesive and reflection during defect identification to some extent, and can improve defect detection accuracy to some extent. In addition, the foregoing defect detection method further provides detection of a blue adhesive presence or absence defect, a blue adhesive offset defect, and a blue adhesive tab exposure defect on the welded cell, and can improve detection accuracy and efficiency to some extent by quickly positioning the blue adhesive detection region. In some embodiments, in the foregoing method, the cell detection region and the blue adhesive detection region are determined according to the type of the to-be-detected defect, that is, different types of to-be-detected defects correspond to different cell detection regions and different blue adhesive detection regions. Therefore, the foregoing method can detect a plurality of types of defects.

In an embodiment, when the control device specifically performs S202 of "Determine a cell detection region in the first cell picture and a blue adhesive detection region in the second cell picture according to a type of a to-be-detected defect", the following step is specifically performed: Determine the cell detection region in the first cell picture and the blue adhesive detection region in the second cell picture according to the type of the to-be-detected defect and related parameters of the to-be-detected cell.

The related parameters of the to-be-detected cell include size parameters of the tab of the to-be-detected cell, size parameters of an adapting piece of the to-be-detected cell, size parameters of a welding mark of the adapting piece of the to-be-detected cell, and size parameters of a welding pad on the adapting piece of the to-be-detected cell.

In this embodiment of the present application, when obtaining the first cell picture, the control device may further determine the type of the to-be-detected defect, and identify and position the cell detection region in the first cell picture and with reference to the related parameters of the to-be-detected cell, to determine the position and the size of the cell detection region in the first cell picture. In some embodiments, the control device may alternatively identify or position the cell detection region in the first cell picture based on an identification or positioning model obtained through pre-training, to determine the position and the size of the cell detection region in the first cell picture. Specifically, at a training stage, the identification or positioning model may be trained based on a picture sample of the cell and a marking sample of the corresponding defect. The marking sample of the defect may be determined by using the related parameters of the cell in the picture sample, so that the trained identification or positioning model may identify or position the cell detection region in the cell picture according to the type of the defect and the related parameters of the cell. At a stage of using the trained identification or positioning model, the related parameters of the to-be-detected cell and the cell picture may be input to the identification or positioning model to identify or position the detection region. In some embodiments, an identification or positioning model used for identifying or positioning cell detection regions corresponding to different types of defects may alternatively be pre-trained. That is, different defect types correspond to different identification or positioning models. During use, a corresponding identification or positioning model may be first determined according to a type of a to-be-detected defect, a first cell picture and related parameters of a cell in the first cell picture are input to the determined identification or positioning model, and a position and a size of a cell detection region in the first cell picture are output.

When obtaining the second cell picture, the control device may further determine the type of the to-be-detected defect, and identify and position the blue adhesive detection region in the second cell picture and with reference to the related parameters of the to-be-detected cell, to determine the position and the size of the blue adhesive detection region in the second cell picture. In some embodiments, the control device may alternatively identify or position the blue adhesive detection region in the second cell picture based on an identification or positioning model obtained through pre-training, to determine the position and the size of the blue adhesive detection region in the second cell picture. Specifically, at a training stage, the identification or positioning model may be trained based on a picture sample of the cell and a marking sample of the corresponding defect. The marking sample of the defect may be determined by using the related parameters of the cell in the picture sample, so that the trained identification or positioning model may identify or position the blue adhesive detection region in the cell picture according to the type of the defect and the related parameters of the cell. At a stage of using the trained identification or positioning model, the related parameters of the to-be-detected cell and the cell picture may be input to the identification or positioning model to identify or position the blue adhesive detection region. In some embodiments, an identification or positioning model used for identifying or positioning blue adhesive detection regions corresponding to different types of defects may alternatively be pre-trained. That is, different defect types correspond to different identification or positioning models. During use, a corresponding identification or positioning model may be first determined according to a type of a to-be-detected defect, a second cell picture and related parameters of a cell in the second cell picture are input to the determined identification or positioning model, and a position and a size of a blue adhesive detection region in the second cell picture are output.

According to the detection method in this embodiment of the present application, corresponding cell detection regions and blue adhesive detection regions are determined according to different types of to-be-detected defects, so that detection of different types of defects can be performed, thereby improving detection comprehensiveness to some extent.

In an embodiment, an implementation of the foregoing determining a cell detection region and a blue adhesive detection region is provided. As shown in FIG. 5, the implementation includes:
S301: Determine a size of a cell detection region in the first cell picture according to a type of a to-be-detected defect and related parameters of the to-be-detected cell.

In this embodiment of the present application, when obtaining the first cell picture, the control device may further determine the type of the to-be-detected defect, and perform size identification on the cell detection region in the first cell picture and with reference to the related parameters of the to-be-detected cell, to determine the size of the cell detection region. In some embodiments, the control device may alternatively perform size identification on the cell detection region in the first cell picture based on an identification model obtained through pre-training, to determine the size of the cell detection region in the first cell picture. Specifically, at a training stage, the identification model may be trained based on a picture sample of the cell and a marking sample of the corresponding defect. The marking sample of the defect may be determined by using the related parameters of the cell in the picture sample, so that the trained identification model may perform size identification on the cell detection region in the cell picture according to the type of the defect and the related parameters of the cell. At a stage of using the trained identification model, the related parameters of the to-be-detected cell and the cell picture may be input to the identification model to perform size identification on the cell detection region. In some embodiments, an identification model used for identifying cell detection regions corresponding to different types of defects may alternatively be pre-trained. That is, different defect types correspond to different identification or positioning models. During use, a corresponding identification model may be first determined according to a type of a to-be-detected defect, a first cell picture and related parameters of a cell in the first cell picture are input to the determined identification model, and a size of a cell detection region in the first cell picture is output.

S302: Determine a size of a blue adhesive detection region in the second cell picture according to the type of the to-be-detected defect and the related parameters of the to-be-detected cell.

In this embodiment of the present application, when obtaining the second cell picture, the control device may further determine the type of the to-be-detected defect, and perform size identification on the blue adhesive detection region in the second cell picture and with reference to the related parameters of the to-be-detected cell, to determine the size of the blue adhesive detection region. In some embodiments, the control device may alternatively perform size identification on the blue adhesive detection region in the second cell picture based on an identification model obtained through pre-training, to determine the size of the blue adhesive detection region in the second cell picture. Specifically, at a training stage, the identification model may be trained based on a picture sample of the cell and a marking sample of the corresponding defect. The marking sample of the defect may be determined by using the related parameters of the cell in the picture sample, so that the trained identification model may perform size identification on the cell detection region in the cell picture according to the type of the defect and the related parameters of the cell. At a stage of using the trained identification model, the related parameters of the to-be-detected cell and the cell picture may be input to the identification model to perform size identification on the blue adhesive detection region. In some embodiments, an identification or positioning model used for identifying blue adhesive detection regions corresponding to different types of defects may alternatively be pre-trained. That is, different defect types correspond to different identification models. During use, a corresponding identification model may be first determined according to a type of a to-be-detected defect, a second cell picture and related parameters of a cell in the second cell picture are input to the determined identification model, and a size of a blue adhesive detection region in the second cell picture is output.

S303: Determine a position of the cell detection region in the first cell picture according to the size of the cell detection region and the related parameters of the to-be-detected cell.

In this embodiment of the present application, when obtaining the first cell picture and after determining the size of the cell detection region based on the foregoing steps, the control device may position the cell detection region in the first cell picture with reference to the related parameters of the to-be-detected cell, to determine the position of the cell detection region. In some embodiments, the control device may alternatively position the cell detection region in the first cell picture based on a positioning model obtained through pre-training, to determine the position of the cell detection region in the first cell picture. Specifically, at a training stage, the positioning model may be trained based on the picture sample of the cell and the marking sample corresponding to the cell detection region. The marking sample of the cell detection region may be determined by using the related parameters of the cell in the picture sample and the size of the cell detection region, so that the trained positioning model can position the cell detection region in the cell picture according to the size of the cell detection region and the related parameters of the to-be-detected cell. At a stage of using the trained positioning model, the size of the cell detection region and the related parameters of the to-be-detected cell may be input to the positioning model to position the cell detection region, and the position of the cell detection region is output. In some embodiments, an identification model used for identifying cell detection regions corresponding to different types of defects may alternatively be pre-trained. That is, cell detection regions of different defect types correspond to different positioning models. During use, a corresponding positioning model may be first determined according to a cell detection region corresponding to a type of a to-be-detected defect, the size of the cell detection region and the related parameters of the to-be-detected cell are input to the determined positioning model, and a position of a cell detection region in the first cell picture is output.

S304: Determine a position of the blue adhesive detection region in the second cell picture according to the size of the blue adhesive detection region and the related parameters of the to-be-detected cell.

In this embodiment of the present application, when obtaining the second cell picture and after determining the size of the blue adhesive detection region based on the foregoing steps, the control device may position the blue adhesive detection region in the second cell picture with reference to the related parameters of the to-be-detected cell, to determine the position of the blue adhesive detection region. In some embodiments, the control device may alternatively position the blue adhesive detection region in the second cell picture based on a positioning model obtained through pre-training, to determine the position of the blue adhesive detection region in the second cell picture. Specifically, at a training stage, the positioning model may be trained based on the picture sample of the cell and the marking sample corresponding to the blue adhesive detection region. The marking sample of the blue adhesive detection region may be determined by using the related parameters of the cell in the picture sample and the size of the blue adhesive detection region, so that the trained positioning model can position the blue adhesive detection region in the cell picture according to the size of the blue adhesive detection region and the related parameters of the to-be-detected cell. At a stage of using the trained positioning model, the size of the blue adhesive detection region and the related parameters of the to-be-detected cell may be input to the positioning model to position the blue adhesive detection region, and the position of the blue adhesive detection region is output. In some embodiments, an identification model used for identifying blue adhesive detection regions corresponding to different types of defects may alternatively be pre-trained. That is, blue adhesive detection regions of different defect types correspond to different positioning models. During use, a corresponding positioning model may be first determined according to a blue adhesive detection region corresponding to a type of a to-be-detected defect, the size of the blue adhesive detection region and the related parameters of the to-be-detected cell are input to the determined positioning model, and a position of a blue adhesive detection region in the second cell picture is output.

According to the method in this embodiment of the present application, a size and a position of a cell detection region and a size and a position of a blue adhesive detection region are determined according to a type of a to-be-detected defect, which can improve accuracy of determining the cell detection region and the blue adhesive detection region to some extent, thereby improving accuracy of detecting a defect.

In an embodiment, an implementation of the determining a size of a cell detection region in the first cell picture according to a type of a to-be-detected defect and related parameters of the to-be-detected cell. As shown in FIG. 6, the method includes:
S401: Determine that the cell detection region is an eversion region if the type of the to-be-detected defect is a tab eversion defect, and determine a size of the eversion region according to size parameters of the tab of the to-be-detected cell, size parameters of an adapting piece of the to-be-detected cell, and size parameters of a welding mark of the adapting piece of the to-be-detected cell.

The eversion region is a cell detection region, and is used for detecting whether a tab eversion defect exists in the first cell picture, or detecting a type of an eversion defect if the eversion defect exists. The size parameters of the tab include a length of the tab and a width of the tab. The size parameters of the adapting piece include a length of a gap between the adapting piece and the cell, a width of the gap, a length of a welding pad of the adapting piece, a width of the welding pad of the adapting piece, a length of any side of the adapting piece, and a position of any side of the adapting piece. The size parameters of the welding mark of the adapting piece of the to-be-detected cell include a quantity of welding points included in the welding mark, a length of a region in which the welding mark is located, and a width of the region in which the welding mark is located.

This embodiment of the present application relates to a scenario in which the type of the to-be-detected defect is a tab eversion defect. In this scenario, the cell detection region is an eversion region. When determining that the type of the to-be-detected defect is a tab eversion defect, the control device may further determine, on the first cell picture, a region in which the tab is located, and use a periphery region of the tab close to the cell as an eversion region. In addition, a size of the periphery region of the tab may be determined according to the size parameters of the adapting piece of the to-be-detected cell, the size parameters of the tab of the to-be-detected cell, and the size parameters of the welding mark of the adapting piece of the to-be-detected cell.

S402: Determine that the cell detection region is a folding region if the type of the to-be-detected defect is a tab folding defect, and determine a size of the folding region according to size parameters of the tab of the to-be-detected cell and size parameters of an adapting piece of the to-be-detected cell.

The folding region is another cell detection region, and is used for detecting whether a tab folding defect exists in the first cell picture, or detecting a type of a folding defect if the folding defect exists.

This embodiment of the present application relates to a scenario in which the type of the to-be-detected defect is a tab folding defect. In this scenario, the cell detection region is a folding region. When determining that the type of the to-be-detected defect is a tab folding defect, the control device may further determine, on the first cell picture, a region in which the tab is located, and use the adhesive pasting region on the adapting as the reversion region, that is, a region of a cathode tab ATll as the reversion region. In addition, a size of the reversion region may be determined according to the size parameters of the tab of the to-be-detected cell and the size parameters of the adapting piece of the to-be-detected cell.

S403: Determine that the cell detection region is a welding mark detection region if the type of the detection defect is a welding mark defect, and determine a size of the welding mark detection region according to size parameters of a welding mark on an adapting piece of the to-be-detected cell.

The welding mark detection region is another cell detection region, and is used for detecting whether the welding mark on the adapting piece of the cell in the first cell picture has a defect, or detecting a type of a defect of the welding mark if the welding mark has the defect.

This embodiment of the present application relates to a scenario in which the type of the to-be-detected defect is a welding mark defect. In this scenario, the cell detection region is a welding mark detection region. When determining that the type of the to-be-detected defect is the welding mark defect, the control device may further determine, on the first cell picture, a region in which the welding mark is located, and use the region in which the welding mark is located as a welding mark detection region. The size of the welding mark detection region may be determined according to size parameters of the welding mark on the adapting piece in the to-be-detected cell.

According to the method in this embodiment of the present application, by determining the size of the eversion region corresponding to the type of the tab eversion defect, determining the size of the folding region corresponding to the type of the tab folding defect, or determining the size of the welding mark detection region corresponding to the type of the welding mark defect, the tab eversion defect, the tab folding defect, or the welding mark defect may be detected.

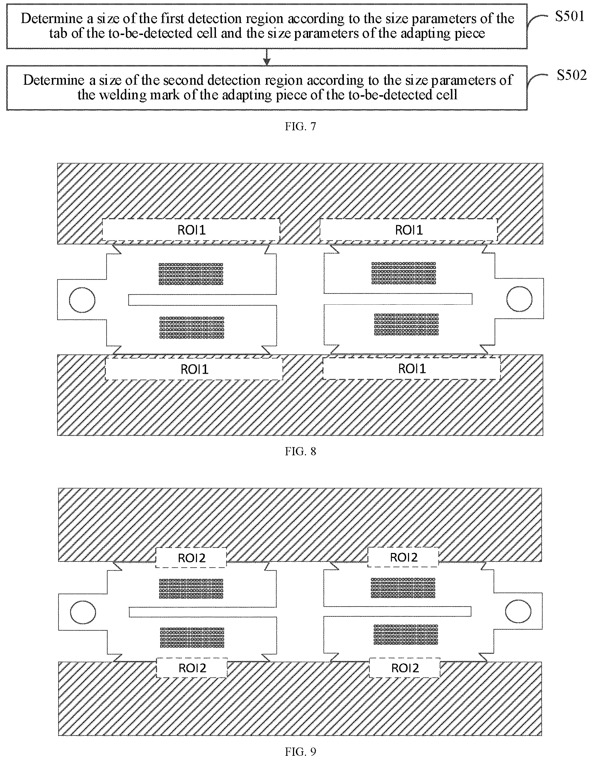

In an embodiment, when the type of the to-be-detected defect is a type of a tab eversion defect, the type of the tab eversion defect may be classified into a white eversion defect and a black eversion defect. The white eversion defect may mean that an angle between an everted part of the tab and the cell is less than or equal to 30° (an angle between a surface of the tab and a surface of the cell is less than or equal to 30°). The black eversion defect may mean that an angle between an everted part of the tab and the cell is greater than 30° and less than 90° (an angle between a surface of the tab and a surface of the cell is greater than 30° and less than 90°). Therefore, the eversion region may include a first detection region and a second detection region. The first detection region is used for detecting whether a white eversion defect of the tab exists in the first cell picture, and the second detection region is used for detecting whether a black eversion defect of the tab exists in the first cell picture. Based on this, an implementation of the foregoing S401, that is, the foregoing S401 of "Determine a size of the eversion region according to size parameters of the tab of the to-be-detected cell, size parameters of an adapting piece of the to-be-detected cell, and size parameters of a welding mark of the adapting piece of the to-be-detected cell" is provided. As shown in FIG. 7, the method includes:
S501: Determine a size of the first detection region according to the size parameters of the tab of the to-be-detected cell and the size parameters of the adapting piece.

The size parameters of the tab include a length of the tab and a width of the tab. The size parameters of the adapting piece include size parameters of the welding pad on the adapting piece, and the size parameters of the welding pad include lengths and positions of all sides of the welding pad. The size of the first detection region includes the length and the width of the first detection region.

In this embodiment of the present application, when obtaining the size parameters of the tab of the to-be-detected cell and the size parameters of the adapting piece based on the foregoing steps, the control device may further determine, according to the size parameters of the tab and the size parameters of the adapting piece, a region of the tab close to the to-be-detected cell, to determine the size of the first detection region. For example, the size of the first detection region may be set to be the same as or close to the size of the tab. Alternatively, a size of a region within a preset range on the adapting piece close to the cell is set to the size of the first detection region. In some embodiments, the control device may determine the size of the first detection region according to a length of the tab of the to-be-detected cell and a width of a gap between the adapting piece and the to-be-detected cell. Specifically, the length of the first detection region may be selected to be greater than the length of the tab by approximately 2 millimeters (mm), and the width of the first detection region may be selected to be the same as the width of the gap between the adapting piece and the to-be-detected cell, or to be greater than the width of the gap between the adapting piece and the to-be-detected cell by 2 mm. For example, refer to a schematic diagram of an eversion region shown in FIG. 8, where ROI1 represents a first detection region.

S502: Determine a size of the second detection region according to the size parameters of the welding mark of the adapting piece of the to-be-detected cell.

The size parameters of the welding mark include a length and a width of a region in which the welding mark is located. The length of the second detection region is less than the length of the first detection region. The width of the second detection region may be the same as the width of the first detection region. The size of the second detection region includes the length and the width of the second detection region.

In this embodiment of the present application, when obtaining the size parameters of the welding mark of the adapting piece of the to-be-detected cell based on the foregoing steps, the control device may further determine, with reference to the size parameters of the welding mark of the adapting piece of the to-be-detected cell, a region of the tab close to the to-be-detected cell, to determine the size of the second detection region. For example, the size of the second detection region may be set to be the same as or close to the size of the region in which the welding mark is located. Alternatively, a size of a region within another preset range on the adapting piece close to the cell is set to the size of the second detection region. In some embodiments, the control device may determine the size of the second detection region according to a length and a width of the welding mark of the adapting piece of the to-be-detected cell. Specifically, the length of the second detection region may be selected to be equal to the length of the welding mark, and the width of the second detection region may be selected to be equal to the width of the welding mark. Alternatively, the length of the second detection region may be selected to be greater than the length of the welding mark by 2 mm, and the width of the second detection region may be selected to be greater than the width of the welding mark by 2 mm. For example, refer to a schematic diagram of an eversion region shown in FIG. 9, where ROI2 represents a second detection region.

According to the method in this embodiment of the present application, by determining the sizes of the first detection region and the second detection region in the eversion region corresponding to the type of the tab eversion defect, a white eversion defect and a black eversion defect in the tab eversion defect may be detected.

In an embodiment, when the type of the to-be-detected defect is a type of a tab folding defect, an implementation of determining a size of a folding region, that is, determining the size of the folding region according to a length of the tab of the to-be-detected cell and a width of a gap between the adapting piece and the to-be-detected cell is provided.

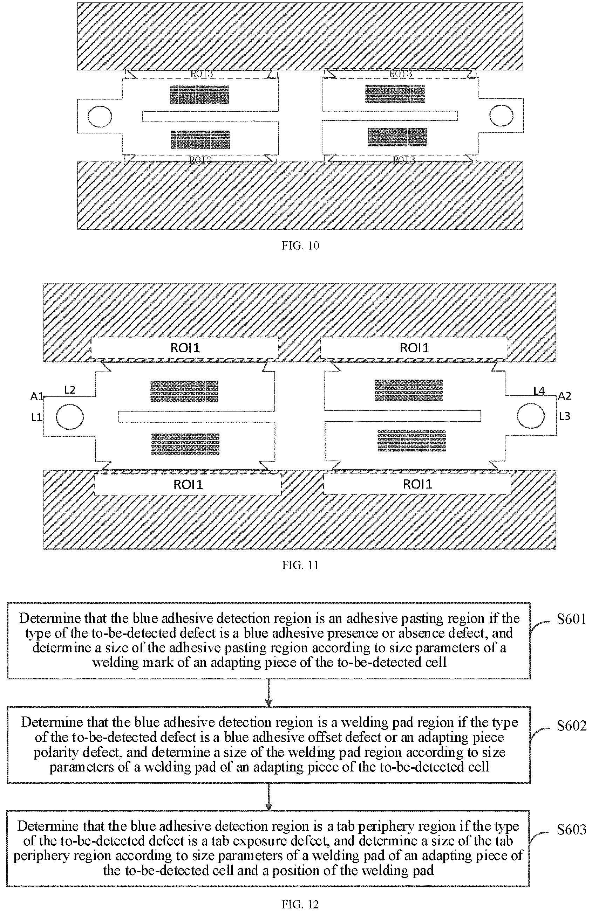

In some embodiments, the control device may determine the size of the folding region according to a length of the tab of the to-be-detected cell and a width of a gap between the adapting piece and the to-be-detected cell. Specifically, the length of the folding region may be selected to be greater than the length of the tab by approximately 2 mm, and the width of the folding region may be selected to be the same as the width of the gap between the adapting piece and the to-be-detected cell, or to be greater than the width of the gap between the adapting piece and the to-be-detected cell by 2 mm. For example, refer to a schematic diagram of an eversion region shown in FIG. 10, where ROI3 represents a folding region.

According to the method in this embodiment of the present application, by determining the size of the folding region corresponding to the type of the tab folding defect, the tab folding defect may be detected.

In an embodiment, when determining the size of the cell detection region based on the method according to any one of the foregoing embodiments, the control device may further determine the position of the cell detection region on the first cell picture. Based on this, an implementation of determining the position of the cell detection region in the first cell picture is provided. That is, when the control device performs S303 of "Determine a position of the cell detection region in the first cell picture according to the size of the cell detection region and the related parameters of the to-be-detected cell" in the embodiment of FIG. 5, the following step is specifically performed: positioning the cell detection region in the first cell picture according to a position of an intersection point of a first side and a second side and with reference to the size of the cell detection region, to determine the position of the cell detection region in the first cell picture, where the first side and the second side are two intersecting sides of the adapting piece in the first cell picture.

The two sides are any two intersecting sides on the adapting piece, for example, two intersecting sides L1 and L2 on a left adapting piece in FIG. 11, which corresponds to an intersection point of A1, or two intersecting sides L3 and L4 on a right adapting piece, which corresponds to an intersection point of A2.

This embodiment of the present application relates to a method for positioning a cell detection region by using a side grabbing method. Specifically, the control device may perform binarization processing on the first cell picture, and process the first cell picture into a black and white picture. Then, the control device may perform side grabbing on the processed picture from left to right and from black to white, to grab a first side (referring to a side L1 shown in FIG. 11), then perform side grabbing on the processed picture from top to bottom and from black to white, to grab a second side (referring to a side L2 shown in FIG. 11), and then determine an intersection point of the first side and the second side (referring to an intersection point A1 of L1 and L2 shown in FIG. 11). Alternatively, the control device may perform side grabbing on the processed picture from right to left and from black to white, to grab a third side (referring to a side L3 shown in FIG. 11), then perform side grabbing on the processed picture from top to bottom and from black to white, to grab a fourth side (referring to a side L4 shown in FIG. 11), and then determine an intersection point of the third side and the fourth side (referring to an intersection point A2 of L3 and L4 shown in FIG. 11). Finally, by using a position of the intersection point (A1 or A2), the cell detection region is positioned in consideration of a distance relationship between the intersection point and the tab and with reference to the size of the cell detection region, and the position of the cell detection region in the first cell picture is determined, and may be specifically represented by position coordinates of a pixel. The distance relationship between the intersection point and the tab may be determined in advance according to a type or a size of the cell in the first cell picture.

According to the detection method in this embodiment of the present application, the cell detection region is positioned through side grabbing, which is simple and efficient in implementation, and can improve efficiency of positioning the cell detection region to some extent, thereby improving detection efficiency.

In an embodiment, an implementation of the determining a size of a blue adhesive detection region in the second cell picture according to the type of the to-be-detected defect and the related parameters of the to-be-detected cell. As shown in FIG. 12, the method includes:
S601: Determine that the blue adhesive detection region is an adhesive pasting region if the type of the to-be-detected defect is a blue adhesive presence or absence defect, and determine a size of the adhesive pasting region according to size parameters of a welding mark of an adapting piece of the to-be-detected cell.

The adhesive pasting region is a blue adhesive detection region, and is used for detecting whether a blue adhesive presence or absence defect exists in the second cell picture. The size parameters of the welding mark include a length and a width of a region in which the welding mark is located.

This embodiment of the present application relates to a scenario in which the type of the to-be-detected defect is a blue adhesive presence or absence defect. In this scenario, the blue adhesive detection region is an adhesive pasting region. When determining that the type of the to-be-detected defect is the blue adhesive presence or absence defect, the control device may further determine an adhesive pasting region on the first cell picture. The size of the adhesive pasting region may be determined according to size parameters of the welding mark on the adapting piece in the to-be-detected cell.

S602: Determine that the blue adhesive detection region is a welding pad region if the type of the to-be-detected defect is a blue adhesive offset defect or an adapting piece polarity defect, and determine a size of the welding pad region according to size parameters of a welding pad of an adapting piece of the to-be-detected cell.

The welding pad region is another blue adhesive detection region, and is used for detecting whether the second cell picture has a blue adhesive offset defect or an adapting piece polarity defect.

This embodiment of the present application relates to a scenario in which the type of the to-be-detected defect is a blue adhesive offset defect or an adapting piece polarity defect. In this scenario, the blue adhesive detection region is a welding pad region. When determining that the type of the to-be-detected defect is the blue adhesive offset defect or the adapting piece polarity defect, the control device may further determine a welding pad region on the second cell picture. The size of the welding pad region may be determined according to size parameters of the welding pad of the adapting piece in the to-be-detected cell.

S603: Determine that the blue adhesive detection region is a tab periphery region if the type of the to-be-detected defect is a tab exposure defect, and determine a size of the tab periphery region according to size parameters of a welding pad of an adapting piece of the to-be-detected cell and a position of the welding pad.

The tab periphery region is another blue adhesive detection region, and is used for detecting whether the second cell picture has a tab exposure defect.

This embodiment of the present application relates to a scenario in which the type of the to-be-detected defect is a tab exposure defect. In this scenario, the blue adhesive detection region is a tab periphery region. When determining that the type of the to-be-detected defect is the tab exposure defect, the control device may further determine a tab periphery region on the second cell picture. The size of the tab periphery region may be determined according to size parameters of the welding pad of the adapting piece in the to-be-detected cell and a position of the welding pad.

According to the method in this embodiment of the present application, by determining the size of the adhesive pasting region, determining the size of the welding pad region, or determining the size of the tab periphery region, the blue adhesive presence or absence defect, the tab folding defect, the blue adhesive offset defect, the adapting piece polarity defect, or the tab exposure defect may be detected.

In an embodiment, when a type of a to-be-detected defect is a type of a blue adhesive presence or absence defect, a corresponding blue adhesive detection region is an adhesive pasting region. Based on this, an implementation of the foregoing S601, that is, the foregoing S601 of "Determine a size of the adhesive pasting region according to size parameters of a welding mark of an adapting piece of the to-be-detected cell" is provided, and includes: determining the size of the adhesive pasting region according to a length of a region in which the welding mark of the adapting piece is located and a width of the region in which the welding mark of the adapting piece is located.

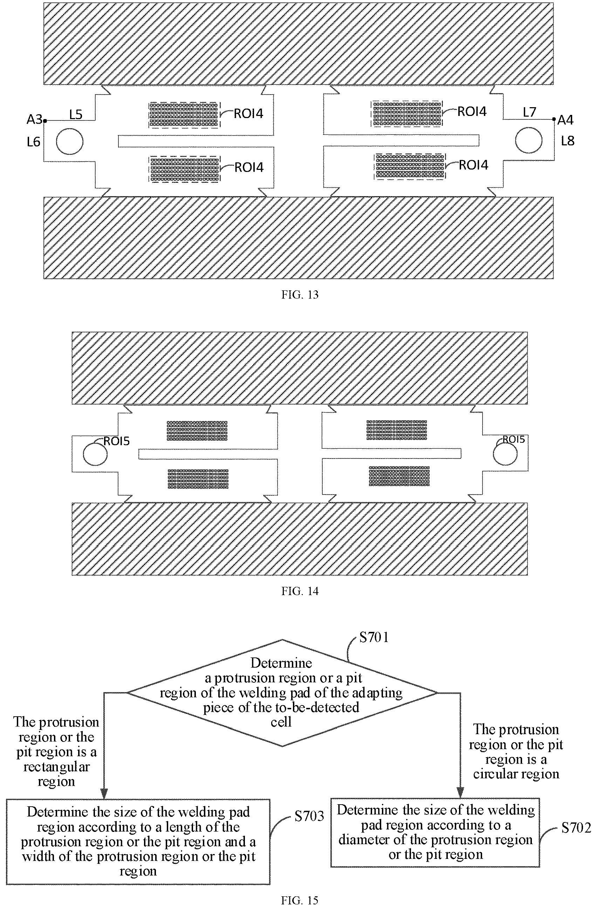

In this embodiment of the present application, when obtaining the size parameters of the welding mark of the adapting piece of the to-be-detected cell based on the foregoing steps, the control device may directly use the length of the region in which the welding mark is located as the length of the adhesive pasting region, and use the width of the region in which the welding mark is located as the width of the adhesive pasting region. In some embodiments, alternatively, the length of the adhesive pasting region may be set based on the length of the region in which the welding mark is located and with reference to a preset length threshold, and the width of the adhesive pasting region may be set based on the width of the region in which the welding mark is located and with reference to a preset width threshold. For example, the length of the adhesive pasting region may be selected to be greater than the length of the region in which the welding mark is located by approximately 2 mm, and the width of the adhesive pasting region may be selected to be greater than the width of the region in which the welding mark is located by approximately 2 mm. For example, refer to a schematic diagram of an adhesive pasting region shown in FIG. 13, where ROI4 represents an adhesive pasting region.

According to the method in this embodiment of the present application, by determining the size of the adhesive pasting region corresponding to the type of the blue adhesive presence or absence defect, the blue adhesive presence or absence defect may be detected.

In an embodiment, when determining the size of the adhesive pasting region based on the method according to any one of the foregoing embodiments, the control device may further determine the position of the adhesive pasting region on the second cell picture. Based on this, an implementation of determining the position of the adhesive pasting region in the second cell picture is provided. That is, when the control device performs S304 of "Determine a position of the blue adhesive detection region in the second cell picture according to the size of the blue adhesive detection region and the related parameters of the to-be-detected cell" in the embodiment of FIG. 5, the following step is specifically performed: positioning the adhesive pasting region in the second cell picture according to a position of an intersection point of a third side and a fourth side and with reference to the size of the adhesive pasting region, to determine a position of the adhesive pasting region in the second cell picture, where the third side and the fourth side are two intersecting sides of the adapting piece in the second cell picture. or determining a position of the adhesive pasting region in the second cell picture according to a position of the region in which the welding mark of the to-be-detected cell is located.

The two sides are any two intersecting sides on the adapting piece, for example, two intersecting sides L5 and L6 on a left adapting piece in FIG. 13, which corresponds to an intersection point ofA3, or two intersecting sides L7 and L8 on a right adapting piece, which corresponds to an intersection point of A4.

This embodiment of the present application relates to a method for positioning a blue adhesive detection region by using a side grabbing method. Specifically, the control device may perform binarization processing on the second cell picture, and process the second cell picture into a black and white picture. Then, the control device may perform side grabbing on the processed picture from left to right and from black to white, to grab a third side (referring to a side L6 shown in FIG. 13), then perform side grabbing on the processed picture from top to bottom and from black to white, to grab a fourth side (referring to a side L5 shown in FIG. 13), and then determine an intersection point of the third side and the fourth side (referring to an intersection point A3 of L5 and L6 shown in FIG. 13). Alternatively, the control device may perform side grabbing on the processed picture from right to left and from black to white, to grab a fifth side (referring to a side L8 shown in FIG. 13), then perform side grabbing on the processed picture from top to bottom and from black to white, to grab a sixth side (referring to a side L7 shown in FIG. 13), and then determine an intersection point of the fifth side and the sixth side (referring to an intersection point A4 of L7 and L8 shown in FIG. 13). Finally, by using a position of the intersection point (A3 or A4), the adhesive pasting region is positioned in consideration of a distance relationship between the intersection point and the position of the welding mark and with reference to the size of the adhesive pasting region, and the position of the adhesive pasting region in the second cell picture is determined, and may be specifically represented by position coordinates of a pixel. The distance relationship between the intersection point and the position of the welding mark may be determined in advance according to the type of the cell in the second cell picture, the type of the adapting piece, the size of the cell, and the size of the adapting piece. In some embodiments, because the size and position of the adhesive pasting region are substantially the same as or similar to those of the region in which the welding mark is located, the control device may directly determine the position of the region in which the welding mark of the to-be-detected cell is located as the position of the adhesive pasting region in the second cell picture.

According to the detection method in this embodiment of the present application, the adhesive pasting region is positioned through side grabbing, which is simple and efficient in implementation, and can improve efficiency of positioning the adhesive pasting region to some extent, thereby improving detection efficiency.

In an embodiment, when the type of the to-be-detected defect is a type of a blue adhesive offset defect or an adapting piece polarity defect, an implementation of determining a size of the welding pad region, that is, determining a size of the welding pad region according to size parameters of a welding pad of an adapting piece of the to-be-detected cell is provided.

In some embodiments, the control device may determine the size of the welding pad region according to the size of the region in which the welding pad on the to-be-detected cell is located. For example, the size of the welding pad region is set to be the same as the size of the region in which the welding pad on the to-be-detected cell is located. In some embodiments, the size of the welding pad region may alternatively be set to be in a range less than the size of the region in which the welding pad on the to-be-detected cell is located by a particular value. For example, the size of the welding pad region may be determined by choosing to compare the length of the welding pad region with the size of the region in which the welding pad is located. For example, the length of the welding pad region is set to be less than the length of the welding on the to-be-detected cell is located by approximately 1 mm, and the width of the welding pad region is selected to be set to be less than the width of the welding on the to-be-detected cell is located by approximately 1 mm. In some embodiments, the control device may divide a region of a preset range from the region in which the welding pad is located, where the region may be a circular region, a rectangular region, or a region in another shape; and then, the divided region is used as a welding pad region, and the size of the welding pad region is determined according to size parameters of the divided region. For example, refer to a schematic diagram shown in FIG. 14, where ROI5 represents a welding pad region.

In some embodiments, an implementation of determining a size of a welding pad region is further provided. As shown in FIG. 15, the implementation includes:
S701: Determine a protrusion region or a pit region of the welding pad of the adapting piece of the to-be-detected cell. Step S702 is performed if the protrusion region or the pit region is a circular region. Step S703 is performed if the protrusion region or the pit region is a rectangular region.

In this embodiment of the present application, the control device may identify or detect the protrusion feature or the pit feature in the picture of the region in which the welding pad in the second cell picture is located. A specific method may be implemented by using an existing picture feature identification or detection algorithm, or may be implemented by using another method.

S702: Determine the size of the welding pad region according to a diameter of the protrusion region or the pit region.

This embodiment of the present application relates to a scenario in which the welding pad region is a protrusion region or a pit region and the protrusion region or the pit region is a circular region. In this scenario, parameters such as an area or a perimeter of the protrusion region or the pit region may be directly calculated according to the diameter of the protrusion region or the pit region, and the size of the welding pad region is determined according to these parameters.

S703: Determine the size of the welding pad region according to a length of the protrusion region or the pit region and a width of the protrusion region or the pit region.

This embodiment of the present application relates to a scenario in which the welding pad region is a protrusion region or a pit region and the protrusion region or the pit region is a rectangular region. In this scenario, parameters such as an area or a perimeter of the protrusion region or the pit region may be directly calculated according to the length of the protrusion region or the pit region and the width of the protrusion region or the pit region, and the size of the welding pad region is determined according to these parameters.

According to the method in this embodiment of the present application, by determining the size of the welding pad region corresponding to the type of the blue adhesive offset defect or the adapting piece polarity defect, the blue adhesive offset defect or the adapting piece polarity defect may be detected.

In some embodiments, another implementation of determining a size of a welding pad region is further provided. As shown in FIG. 15, the implementation includes: determining the size of the welding pad region according to a length of a region in which the welding pad of the adapting piece of the to-be-detected cell is located and a width of the region in which the welding pad of the adapting piece is located; or determining the size of the welding pad region according to size parameters of a protrusion region or a pit region of the welding pad of the adapting piece.

In this embodiment of the present application, the control device may directly set the size of the region in which the welding pad is located to be the same as the size of the welding pad region, for example, directly set the length of the region in which the welding pad is located to be the same as the length of the welding pad region, and directly set the width of the region in which the welding pad is located to be the same as the width of the welding pad region. In some embodiments, the control device may determine the size of the welding pad region based on the method in the foregoing embodiments by detecting size parameters of a protrusion region or a pit region of the welding pad of the adapting piece.

According to the method in this embodiment of the present application, by determining the size of the welding pad region corresponding to the type of the blue adhesive offset defect or the adapting piece polarity defect, the blue adhesive offset defect or the adapting piece polarity defect may be detected.

In an embodiment, when determining the size of the welding pad region based on the method according to any one of the foregoing embodiments, the control device may further determine the position of the welding pad region on the second cell picture. Based on this, an implementation of determining the position of the welding pad region in the second cell picture is provided. That is, when the control device performs S304 of "Determine a position of the blue adhesive detection region in the second cell picture according to the size of the blue adhesive detection region and the related parameters of the to-be-detected cell" in the embodiment of FIG. 5, the following step is specifically performed: positioning the welding pad region in the second cell picture according to a position of the welding pad of the adapting piece of the to-be-detected cell and with reference to the size of the welding pad region, to determine a position of the welding pad region in the second cell picture.

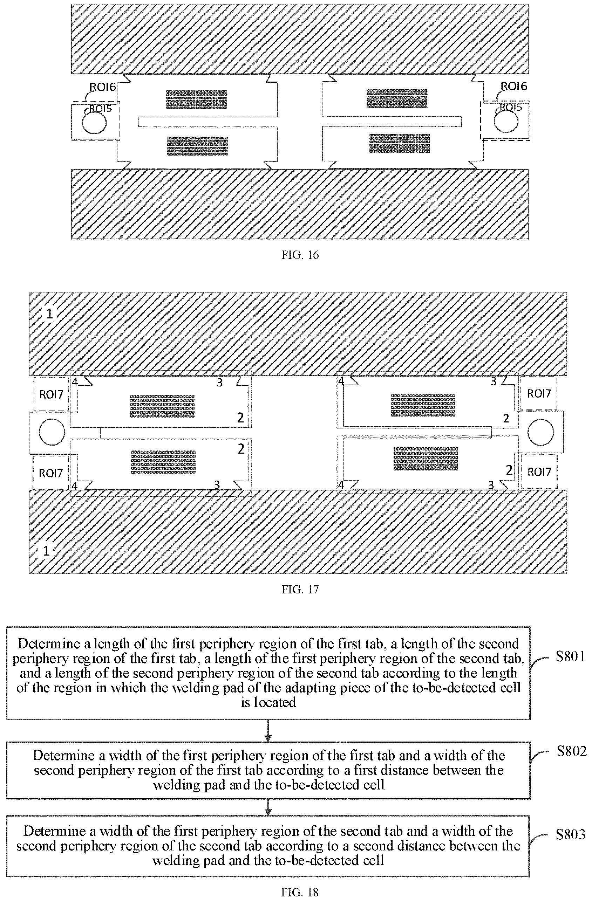

In this embodiment of the present application, after determining the size of the welding pad region, the control device may further identify the welding pad in the second cell picture, determine a position of the welding pad, and determine a position of a region in which the welding pad is located; and then determine a position of the welding pad region according to the position of the welding pad or the position of the region in which the welding pad is located. For example, referring to a diagram shown in FIG. 16, ROI5 represents a welding pad region, and a rectangular region ROI6 in which the circular region ROI5 is located represents a region in which a welding pad is located.

According to the detection method in this embodiment of the present application, the welding pad region is positioned by identifying the welding pad, which is simple and efficient in implementation, and can improve efficiency of positioning the welding pad region to some extent, thereby improving detection efficiency.

In an embodiment, when a type of a to-be-detected defect is a type of a tab exposure defect, a corresponding blue adhesive detection region is a tab periphery region. Based on this, an implementation of the foregoing S603, that is, the foregoing S603 of "Determine a size of the tab periphery region according to size parameters of a welding pad of an adapting piece of the to-be-detected cell and a position of the welding pad" is provided, and includes: determining the size of the tab periphery region according to a length of a region in which the welding pad of the adapting piece of the to-be-detected cell is located and a distance between the welding pad and the to-be-detected cell.

In this embodiment of the present application, when obtaining the size parameters of the region in which the welding mark of the adapting piece of the to-be-detected cell is located based on the foregoing steps, the control device may directly use the length of the region in which the welding mark is located as the length of the tab periphery region, and use the distance between the welding pad and the to-be-detected cell as the width of the tab periphery region. In some embodiments, alternatively, the length of the tab periphery region may be set based on the length of the region in which the welding mark is located and with reference to a preset length threshold, and the width of the tab periphery region may be set based on a distance between the welding pad and the to-be-detected cell and with reference to a preset width threshold. For example, the length of the tab periphery region may be selected to be less than the length of the region in which the welding mark is located by approximately 2 mm, and the width of the tab periphery region may be selected to be less than the distance between the welding pad and the to-be-detected cell by approximately 1 mm. For example, refer to a schematic diagram of a tab periphery region shown in FIG. 17, where ROI7 represents a tab periphery region.

According to the method in this embodiment of the present application, by determining the size of the tab periphery region corresponding to the type of the tab exposure defect, the tab exposure defect may be detected.

In some embodiments, the tab periphery region may include a first periphery region of a first tab, a second periphery region of the first tab, a first periphery region of a second tab, and a second periphery region of the second tab. In this case, a method for the foregoing "determining the size of the tab periphery region according to a length of a region in which the welding pad of the adapting piece of the to-be-detected cell is located and a distance between the welding pad and the to-be-detected cell" is provided. As shown in FIG. 18, the method includes:
S801: Determine a length of the first periphery region of the first tab, a length of the second periphery region of the first tab, a length of the first periphery region of the second tab, and a length of the second periphery region of the second tab according to the length of the region in which the welding pad of the adapting piece of the to-be-detected cell is located.
S802: Determine a width of the first periphery region of the first tab and a width of the second periphery region of the first tab according to a first distance between the welding pad and the to-be-detected cell.
S803: Determine a width of the first periphery region of the second tab and a width of the second periphery region of the second tab according to a second distance between the welding pad and the to-be-detected cell.

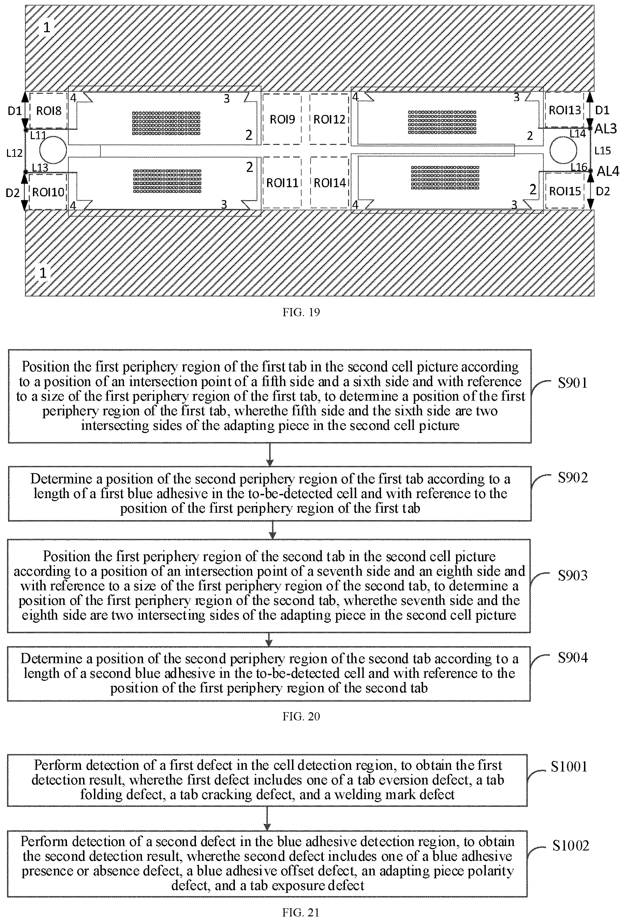

In this embodiment of the present application, refer to a schematic diagram shown in FIG. 19, where ROI8 or ROI13 represent a first periphery region of a first tab, ROI9 or ROI12 represent a second periphery region of the first tab, ROI10 or ROI15 represent a first periphery region of a second tab, and ROI11 or ROI14 represent a second periphery region of the second tab. The sizes of the regions may be the same or may be different. Specifically, the length of the region in which the welding pad in the adapting piece of the to-be-detected cell is located may be directly determined as the length of the first periphery region (ROI8 or ROI13) of the first tab, the length of the second periphery region (ROI9 or ROI12) of the first tab, the length of the first periphery region (ROI10 or ROI15) of the second tab, and the length of the second periphery region (ROI11 or ROI14) of the second tab. In some embodiments, alternatively, the length of the first periphery region of the first tab, the length of the second periphery region of the first tab, the length of the first periphery region of the second tab, and the length of the second periphery region of the second tab may be each set based on the length of the region in which the welding pad is located and with reference to an incremental or decremental length threshold. It should be noted that the periphery regions may correspond to a same incremental or decremental length threshold, or may correspond to different incremental or decremental length thresholds.

In some embodiments, the first distance between the welding pad and the to-be-detected cell may be directly determined as the width of the first periphery region (ROI8 or ROI13) of the first tab and the width of the second periphery region (ROI9 or ROI12) of the first tab. In some embodiments, alternatively, the width of the first periphery region of the first tab and the width of the second periphery region of the first tab may be each set based on the first distance between the welding pad and the to-be-detected cell and with reference to an incremental or decremental first width threshold. It should be noted that the periphery regions may correspond to a same incremental or decremental width threshold, or may correspond to different incremental or decremental width thresholds. Refer to a schematic diagram shown in FIG. 19, where D1 represents a first distance, 1 represents a to-be-detected cell, 2 represents an adapting piece, 3 represents a tab, and 4 represents a blue adhesive. The first width threshold may be determined in advance according to an actual detection requirement.

In some embodiments, the second distance between the welding pad and the to-be-detected cell may be directly determined as the width of the first periphery region (ROI10 or ROI15) of the second tab and the width of the second periphery region (ROI11 or ROI14) of the second tab. In some embodiments, alternatively, the width of the first periphery region (ROI10 or ROI15) of the second tab and the width of the second periphery region (ROI11 or ROI14) of the second tab may be each set based on the second distance between the welding pad and the to-be-detected cell and with reference to an incremental or decremental second width threshold. It should be noted that the periphery regions may correspond to a same incremental or decremental width threshold, or may correspond to different incremental or decremental width thresholds. Refer to a schematic diagram shown in FIG. 19, where D1 represents a first distance, 1 represents a to-be-detected cell, 2 represents an adapting piece, 3 represents a tab, and 4 represents a blue adhesive. The second width threshold may be determined in advance according to an actual detection requirement.

According to the method in this embodiment of the present application, the size of the tab periphery region is determined, and the tab periphery region substantially covers all regions in which the tab may be exposed, so that the tab exposure defect may be detected.

In an embodiment, when determining the size of the tab periphery region based on the method according to any one of the foregoing embodiments, the control device may further determine the position of the tab periphery region on the second cell picture. Based on this, an implementation of determining the position of the tab periphery region in the second cell picture is provided. That is, when the control device performs S304 of "Determine a position of the blue adhesive detection region in the second cell picture according to the size of the blue adhesive detection region and the related parameters of the to-be-detected cell" in the embodiment of FIG. 5, as shown in FIG. 20, the following steps are specifically performed:
S901: Position the first periphery region of the first tab in the second cell picture according to a position of an intersection point of a fifth side and a sixth side and with reference to a size of the first periphery region of the first tab, to determine a position of the first periphery region of the first tab, where the fifth side and the sixth side are two intersecting sides of the adapting piece in the second cell picture.

The two sides are any two intersecting sides of a head portion or a welding pad portion on the adapting piece, for example, two intersecting sides L11 and L12 on a left adapting piece in FIG. 19, which corresponds to an intersection point of AL1, or two intersecting sides L14 and L15 on a right adapting piece in the figure, which corresponds to an intersection point of AL3.

This embodiment of the present application relates to a method for positioning a first periphery region of a first tab by using a side grabbing method. Specifically, the control device may perform binarization processing on the second cell picture, and process the second cell picture into a black and white picture. Then, the control device may perform side grabbing on the processed picture from left to right and from black to white, to grab a fifth side (referring to a side L12 shown in FIG. 19), then perform side grabbing on the processed picture from top to bottom and from black to white, to grab a sixth side (referring to a side L11 shown in FIG. 19), and then determine an intersection point of the fifth side and the sixth side (referring to an intersection point AL1 of L11 and L12 shown in FIG. 19). Alternatively, the control device may perform side grabbing on the processed picture from right to left and from black to white, to grab a fifth side (referring to a side L15 shown in FIG. 19), then perform side grabbing on the processed picture from top to bottom and from black to white, to grab a sixth side (referring to a side L14 shown in FIG. 19), and then determine an intersection point of the fifth side and the sixth side (referring to an intersection point AL3 of L14 and L15 shown in FIG. 19). Finally, by using a position of the intersection point (AL1 or AL3), the first periphery region of the first tab is positioned in consideration of a distance relationship between the intersection point and the position of the first tab and with reference to the size of the first periphery region of the first tab, and the position of the first periphery region of the first tab in the second cell picture is determined, and may be specifically represented by position coordinates of a pixel. The distance relationship between the intersection point and the position of the first tab may be determined in advance according to the type of the cell in the second cell picture, the type of the adapting piece, the type of the tab, the size of the cell, the size of the adapting piece, and the size of the tab.

S902: Determine a position of the second periphery region of the first tab according to a length of a first blue adhesive in the to-be-detected cell and with reference to the position of the first periphery region of the first tab.

The length of the first blue adhesive refers to the blue adhesive covering the first tab of the to-be-detected cell, and the length of the first blue adhesive may be determined according to a pasting requirement of the blue adhesive covering the first tab.

In this embodiment of the present application, when determining the position of the first periphery region of the first tab based on the foregoing steps, the control device may further determine, based on the position, the position of the second periphery region of the first tab according to the length of the first blue adhesive. For example, referring to FIG. 19, after a position of the first periphery region ROI8 of the first tab is determined, a rightward movement may be performed by the length of the first blue adhesive based on the position, and a position reached after the movement is determined as a position of the second periphery region ROI9 of the first tab. Alternatively, after a position of the first periphery region ROI13 of the first tab is determined, a rightward movement may be performed by the length of the first blue adhesive based on the position, and a position reached after the movement is determined as a position of the second periphery region ROI12 of the first tab.

S903: Position the first periphery region of the second tab in the second cell picture according to a position of an intersection point of a seventh side and an eighth side and with reference to a size of the first periphery region of the second tab, to determine a position of the first periphery region of the second tab, where the seventh side and the eighth side are two intersecting sides of the adapting piece in the second cell picture.

The two intersecting sides are any two sides of a head portion or a welding pad portion on the adapting piece, for example, two intersecting sides L12 and L13 on a left adapting piece in FIG. 19, which corresponds to an intersection point of AL2, or two intersecting sides L15 and L16 on a right adapting piece in the figure, which corresponds to an intersection point of AL4.

This embodiment of the present application relates to a method for positioning a first periphery region of a second tab by using a side grabbing method. Specifically, the control device may perform binarization processing on the second cell picture, and process the second cell picture into a black and white picture. Then, the control device may perform side grabbing on the processed picture from left to right and from black to white, to grab a seventh side (referring to a side L12 shown in FIG. 19), then perform side grabbing on the processed picture from bottom to top and from black to white, to grab an eighth side (referring to a side L13 shown in FIG. 19), and then determine an intersection point of the seventh side and the eighth side (referring to an intersection point AL2 of L12 and L13 shown in FIG. 19). Alternatively, the control device may perform side grabbing on the processed picture from right to left and from black to white, to grab a seventh side (referring to a side L15 shown in FIG. 19), then perform side grabbing on the processed picture from bottom to top and from black to white, to grab an eighth side (referring to a side L16 shown in FIG. 19), and then determine an intersection point of the seventh side and the eighth side (referring to an intersection point AL4 of L15 and L16 shown in FIG. 19). Finally, by using a position of the intersection point (AL2 or AL4), the first periphery region of the second tab is positioned in consideration of a distance relationship between the intersection point and the position of the second tab and with reference to the size of the first periphery region of the second tab, and the position of the first periphery region of the second tab in the second cell picture is determined, and may be specifically represented by position coordinates of a pixel. The distance relationship between the intersection point and the position of the second tab may be determined in advance according to the type of the cell in the second cell picture, the type of the adapting piece, the type of the tab, the size of the cell, the size of the adapting piece, and the size of the tab.

S904: Determine a position of the second periphery region of the second tab according to a length of a second blue adhesive in the to-be-detected cell and with reference to the position of the first periphery region of the second tab.

The length of the second blue adhesive refers to the blue adhesive covering the second tab of the to-be-detected cell, and the length of the second blue adhesive may be determined according to a pasting requirement of the blue adhesive covering the second tab.

In this embodiment of the present application, when determining the position of the first periphery region of the second tab based on the foregoing steps, the control device may further determine, based on the position, the position of the second periphery region of the second tab according to the length of the second blue adhesive. For example, referring to FIG. 19, after a position of the first periphery region ROI10 of the second tab is determined, a rightward movement may be performed by the length of the first blue adhesive based on the position, and a position reached after the movement is determined as a position of the second periphery region ROI11 of the second tab. Alternatively, after a position of the first periphery region ROI15 of the second tab is determined, a rightward movement may be performed by the length of the second blue adhesive based on the position, and a position reached after the movement is determined as a position of the second periphery region ROI14 of the second tab.

According to the detection method in this embodiment of the present application, the first periphery region of the first tab, the second periphery region of the first tab, the first periphery region of the second tab, and the second periphery region of the second tab are positioned through side grabbing, which is simple and efficient in implementation, and can improve efficiency of positioning the tab periphery region to some extent, thereby improving detection efficiency.

In an embodiment, a method for separately performing defect detection on a cell detection region and a blue adhesive detection region is provided. That is, as shown in FIG. 21, the method includes:
S1001: Perform detection of a first defect in the cell detection region, to obtain the first detection result, where the first defect includes one of a tab eversion defect, a tab folding defect, a tab cracking defect, and a welding mark defect.
S1002: Perform detection of a second defect in the blue adhesive detection region, to obtain the second detection result, where the second defect includes one of a blue adhesive presence or absence defect, a blue adhesive offset defect, an adapting piece polarity defect, and a tab exposure defect.

In this embodiment of the present application, when determining the cell detection region and the blue adhesive detection region based on the foregoing steps, the control device may detect a tab eversion defect, a tab folding defect, a tab cracking defect, or a welding mark defect based on the cell detection region; and detect a blue adhesive presence or absence defect, a blue adhesive offset defect, an adapting piece polarity defect, and a tab exposure defect based on the blue adhesive detection region.

According to the method in this embodiment of the present application, a series of defect detection on the to-be-detected cell before adhesive pasting and a series of defect detection on the to-be-detected cell after adhesive pasting are implemented, which is clear in division of work, and can implement comprehensive detection on the to-be-detected cell.

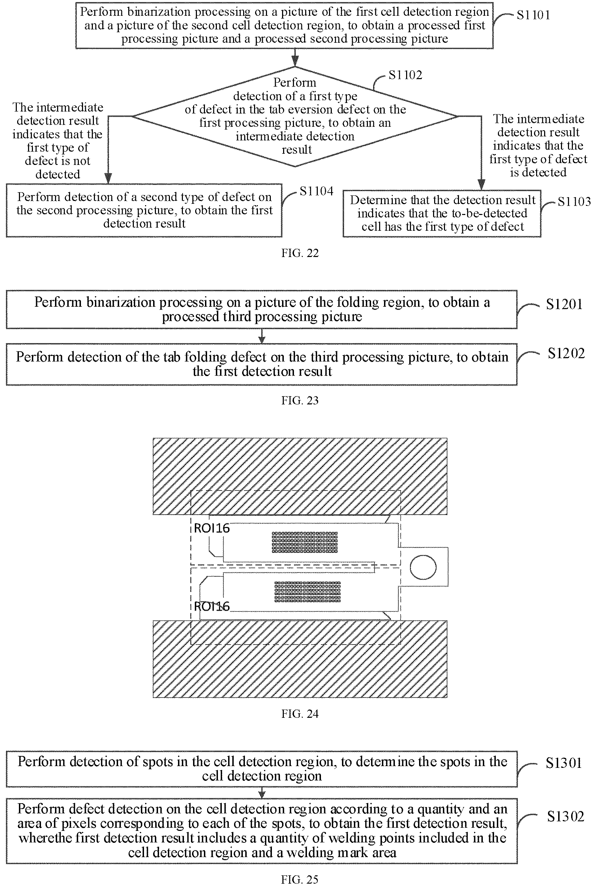

In an embodiment, when a tab eversion defect is detected, the cell detection region includes a tab folding detection region, the tab folding detection region includes an eversion region, and the eversion region includes a first cell detection region used for detecting a white eversion defect and a second cell detection region used for detecting a black eversion defect. In this scenario, a method for performing defect detection based on a cell detection region is provided. That is, as shown in FIG. 22, the foregoing S1001 of "performing detection of a first defect in the cell detection region, to obtain the first detection result" includes:
S1101: Perform binarization processing on a picture of the first cell detection region and a picture of the second cell detection region, to obtain a processed first processing picture and a processed second processing picture.

In this embodiment of the present application, when determining the first cell detection region and the second cell detection region in the first cell picture, the control device may further extract a picture of the first cell detection region and a picture of the second cell detection region from the first cell picture, and then perform binarization processing on the picture of the first cell detection region and the picture of the second cell detection region, that is, convert the picture of the first cell detection region and the picture of the second cell detection region into a black and white picture (grayscale values of pixels on the picture vary from black to white, namely, from 0 to 255), so as to perform defect detection based on the black and white picture.

S1102: Perform detection of a first type of defect in the tab eversion defect on the first processing picture, to obtain an intermediate detection result. Step S1103 is performed if the intermediate detection result indicates that the first type of defect is detected. Step S104 is performed if the intermediate detection result indicates that the first type of defect is not detected.

The detection of the first type of defect is detection of a white eversion defect, that is, detection of a white object. The first detection result in this scenario indicates whether the first type of defect can be detected, that is, whether the first type of defect exists in the first processing picture.

S1103: Determine that the detection result indicates that the to-be-detected cell has the first type of defect.

In this embodiment of the present application, when obtaining the first processing picture, the control device may first detect the first type of defect in the first processing picture. In some embodiments, detection of the first processing picture may be performed by using a pre-trained detection model, to obtain an intermediate detection result. When the intermediate detection result indicates that the first type of defect is detected, the detection may be stopped, and it is determined that the final first detection result indicates that the to-be-detected cell has the first type of defect, that is, the to-be-detected cell has the white eversion defect.

In some embodiments, when performing detection of a first type of defect in the tab eversion defect on the first processing picture, to obtain an intermediate detection result, the control device may specifically perform the following steps: determining whether a cell detection region of the first processing picture includes a pixel whose grayscale value is within a first grayscale threshold range; and determining that the intermediate detection result indicates that the first type of defect is detected if the cell detection region includes a pixel whose grayscale value is within the first grayscale threshold range; or determining that the intermediate detection result indicates that the first type of defect is not detected if the cell detection region does not include a pixel whose grayscale value is within the first grayscale threshold range.

In this embodiment of the present application, the control device may set a first grayscale threshold range (for example, from 230 to 255) for detection of a white eversion defect. During specific detection, the control device may compare a grayscale value of each pixel on the cell detection region in the first processing picture with the first grayscale threshold range, and determine whether the cell detection region includes a pixel whose grayscale value is within the first grayscale threshold range. If the cell detection region includes a pixel whose grayscale value is within the first grayscale threshold range, it indicates that a white eversion defect is detected in the cell detection region, that is, it is determined that the intermediate detection result indicates that the first type of defect is detected. If the cell detection region does not include a pixel whose grayscale value is within the first grayscale threshold range, it indicates that a white eversion defect is not detected in the cell detection region, that is, it is determined that the intermediate detection result indicates that the first type of defect is not detected. In some embodiments, because incorrect detection may occur when a tab white eversion defect is detected, when detection of the first type of defect is performed on the first cell detection region, an area lower-limit threshold may be further set. The area lower-limit threshold may be used for filtering the first type of defect or removing interference from the first type of defect. Specifically, the control device may determine an area feature of the corresponding type of defect according to a feature of an actual tab white eversion defect, and then determine an area lower-limit threshold according to the area feature; and then when detection of the tab white eversion defect is performed and the tab white eversion defect is detected, may first calculate an area corresponding to the feature of the tab white eversion defect, and finally determine whether the tab white eversion defect is a real tab white eversion defect according to the area and the area lower-limit threshold. For example, when the area is inconsistent with the area lower-limit threshold or a difference between the area and the area lower-limit threshold exceeds a preset range, it may be determined that the tab white eversion defect is a real tab white eversion defect; or when the area is consistent with the area lower-limit threshold or a difference between the area and the area lower-limit threshold does not exceed a preset range, it may be determined that the tab white eversion defect is not a real tab white eversion defect.

S1104: Perform detection of a second type of defect in the tab eversion defect on the second processing picture, to obtain the first detection result.

The detection of the second type of defect is detection of a black eversion defect, that is, detection of a black object. The first detection result in this scenario indicates whether the second type of defect can be detected, that is, whether the second type of defect exists in the second processing picture.

In this embodiment of the present application, when the intermediate detection result indicates that the second type of defect is detected, the detection may be continued. Specifically, detection of the second type of defect is performed on the second processing picture. In some embodiments, detection of the second processing picture may alternatively be performed by using a pre-trained detection model, to obtain the first detection result.

In some embodiments, when performing detection of a second type of defect on the second processing picture, to obtain the first detection result, the control device may specifically perform the following steps: determining whether a cell detection region of the second processing picture includes a pixel whose grayscale value is within a second grayscale threshold range (for example, from 0 to 120); and determining that the first detection result indicates that the second type of defect is detected if the cell detection region of the second processing picture includes a pixel whose grayscale value is within the second grayscale threshold range; or determining that the first detection result indicates that the second type of defect is not detected if the cell detection region of the second processing picture does not include a pixel whose grayscale value is within the second grayscale threshold range.

In this embodiment of the present application, the control device may set a second grayscale threshold range (for example, from 0 to 120) for detection of a black eversion defect. During specific detection, the control device may compare a grayscale value of each pixel on the cell detection region in the second processing picture with the second grayscale threshold range, and determine whether the cell detection region includes a pixel whose grayscale value is within the second grayscale threshold range. If the cell detection region includes a pixel whose grayscale value is within the second grayscale threshold range, it indicates that a black eversion defect is detected in the cell detection region, that is, it is determined that the first detection result indicates that the second type of defect is detected. If the cell detection region does not include a pixel whose grayscale value is within the second grayscale threshold range, it indicates that a black eversion defect is not detected in the cell detection region, that is, it is determined that the first detection result indicates that the second type of defect is not detected. In some embodiments, because incorrect detection may occur when a tab black eversion defect is detected, when detection of the second type of defect is performed on the second cell detection region, an area lower-limit threshold may be further set. The area lower-limit threshold may be used for filtering the second type of defect or removing interference from the first type of defect. Specifically, the control device may determine an area feature of the corresponding type of defect according to a feature of an actual tab black eversion defect, and then determine an area lower-limit threshold according to the area feature; and then when detection of the tab black eversion defect is performed and the tab black eversion defect is detected, may first calculate an area corresponding to the feature of the tab black eversion defect, and finally determine whether the tab black eversion defect is a real tab black eversion defect according to the area and the area lower-limit threshold. For example, when the area is inconsistent with the area lower-limit threshold or a difference between the area and the area lower-limit threshold exceeds a preset range, it may be determined that the tab black eversion defect is a real tab black eversion defect; or when the area is consistent with the area lower-limit threshold or a difference between the area and the area lower-limit threshold does not exceed a preset range, it may be determined that the tab black eversion defect is not a real tab black eversion defect.

According to the detection method in this embodiment of the present application, a tab white eversion defect and a tab black eversion defect may be detected, and a detection region corresponding to the tab white eversion defect is different from a detection region corresponding to the tab black eversion defect. Therefore, detection of the detection region corresponding to the tab white eversion defect is first performed, and in a scenario in which the tab white eversion defect is not detected, detection of the detection region corresponding to the tab black eversion defect is then performed, which can improve detection efficiency to some extent. In some embodiments, in the foregoing method, a white eversion defect and a black eversion defect are detected by setting a first grayscale threshold range corresponding to a tab white eversion defect and setting a second grayscale threshold range corresponding to a tab black eversion defect. The method is easy to implement, and can improve detection efficiency to some extent.

In an embodiment, when the type of the to-be-detected defect is a type of a tab folding defect, the cell detection region includes a tab folding detection region, and the tab folding detection region includes a folding region. In this scenario, a method for performing defect detection based on a folding region is provided. That is, as shown in FIG. 23, the foregoing S1001 of "performing detection of a first defect in the cell detection region, to obtain the first detection result" includes:
S1201: Perform binarization processing on a picture of the folding region, to obtain a processed third processing picture.

In this embodiment of the present application, when determining the folding region in the first cell picture, the control device may further extract a picture of the folding region from the first cell picture, and then perform binarization processing on the picture of the folding region, that is, convert the picture of the folding region into a black and white picture (grayscale values of pixels on the picture vary from black to white, namely, from 0 to 255), so as to perform defect detection based on the black and white picture.

In some embodiments, the folding region may further include a third cell detection region used for detecting a white folding defect, and a fourth cell detection region used for detecting a black folding defect. In this scenario, a method for performing defect detection based on the folding region may also be provided. The method is substantially the same as the detection method in the embodiment of FIG. 11. For detailed description, refer to the foregoing content. Details are not described herein again.

S1202: Perform detection of the tab folding defect on the third processing picture, to obtain the first detection result.

In this embodiment of the present application, when obtaining the third processing picture, the control device may perform detection of a tab folding defect on the third processing picture. In some embodiments, detection of the third processing picture may be performed by using a pre-trained folding defect detection model, to obtain the first detection result.

In some embodiments, when the folding region includes the third cell detection region and the fourth cell detection region, the control device may first perform detection of a first type of defect (detection of a white folding defect) on the third processing picture. In some embodiments, detection of the third processing picture may be performed by using a pre-trained detection model, to obtain an intermediate detection result. When the intermediate detection result indicates that the first type of defect is detected, the detection may be stopped, and it is determined that the final first detection result indicates that the to-be-detected cell has the first type of defect, that is, the to-be-detected cell has the white folding defect. When the intermediate detection result indicates that the second type of defect is detected (a black folding defect is detected), the detection may be continued. Specifically, detection of the second type of defect is performed on the third processing picture. In some embodiments, detection of the third processing picture may alternatively be performed by using a pre-trained detection model, to obtain the first detection result. It should be noted that, a specific method for detecting a white folding defect and a specific method for detecting a black folding defect are both described in the foregoing content. For details, refer to the foregoing description. Details are not described herein again.

According to the detection method in this embodiment of the present application, a method for detecting whether a tab of an adapting piece on a cell is covered with an adhesive pasting region is implemented. Compared with a conventional tab detection method, a new detection item is added, so that a yield of a product can be improved.

In an embodiment, when the type of the to-be-detected defect is a type of a tab blocking defect, the cell detection region includes a tab blocking detection region. In this scenario, a method for performing defect detection based on a folding region is provided. That is, when performing the foregoing S1001 of "performing detection of a first defect in the cell detection region, to obtain the first detection result", the control device specifically performs the following step: inputting a picture of the tab blocking detection region into a preset detection model to detect the tab cracking defect, to obtain the first detection result, where the first detection result includes a tab cracking confidence degree.

The detection model is a pre-trained detection model, and the detection model is used for performing cracking detection on the tab. During training of the detection model, an on-site defect sample may be collected, a picture is taken to mark a defect, and the defect detection model is obtained by performing training through deep learning.

In this embodiment of the present application, when determining that the type of the to-be-detected defect is a tab cracking defect, the control device determines that the cell detection region is a tab blocking detection region, and determines a size of the tab blocking detection region according to size parameters of the tab of the to-be-detected cell and size parameters of the adapting piece of the to-be-detected cell; and then, determines a position of the tab blocking detection region in the first cell picture according to the size of the cell detection region and the related parameters of the to-be-detected cell (referring to a schematic diagram in FIG. 24, where ROI16 presents a tab blocking detection region). When determining the tab blocking detection region, the control device may extract a picture of the tab blocking detection region from the first cell picture, then input the picture of the tab blocking detection region into a pre-trained detection model, identify whether a part that is not blocked by the adapting piece has a cracking defect, output a tab cracking confidence degree, and finally determine whether a back tab cracking defect exists based on the tab cracking confidence degree. For example, when the back tab cracking confidence degree is greater than 80%, it is determined that the back tab cracking defect exists. In this case, it may be determined that the to-be-detected cell is an NG product.

The embodiments of the present application provide a method for detecting a back tab cracking defect. In addition, a tab blocking detection region is quickly positioned, and detection is implemented by using a trained deep learning model, so that detection accuracy and efficiency can be improved to some extent.

In an embodiment, when the type of the to-be-detected defect is a type of a welding mark defect, the cell detection region includes a welding mark detection region. In this scenario, a method for performing defect detection based on a welding mark detection region is provided. That is, as shown in FIG. 25, the foregoing S1001 of "performing detection of a first defect in the cell detection region, to obtain the first detection result" includes:
S1301: Perform detection of spots in the cell detection region, to determine the spots in the cell detection region.

In this embodiment of the present application, when determining that the type of the to-be-detected defect is a welding mark defect, the control device determines that the cell detection region is a welding mark detection region, and determines a size of the welding mark detection region according to size parameters of the adapting piece of the to-be-detected cell; and then, determines a position of the welding mark detection region in the first cell picture according to the size of the welding mark detection region and the related parameters of the to-be-detected cell (referring to a schematic diagram shown in FIG. 13, where ROI4 presents a welding mark detection region). When determining the welding mark detection region, the control device may extract a picture of the welding mark detection region from the first cell picture, then input the picture of the welding mark detection region into a pre-trained detection model, and identify a quantity of spots in the detection region, a quantity of pixels corresponding to a spot, and positions of the spots.

In some embodiments, the control device may identify, by using spots algorithm, the quantity of spots in the cell detection region, that is, the quantity of welding points, and may further identify the size of a spot, that is, the quantity of pixels corresponding to each spot.

S1302: Perform defect detection on the cell detection region according to a quantity and an area of pixels corresponding to each of the spots, to obtain the first detection result, where the first detection result includes a quantity of welding points included in the cell detection region and a welding mark area.

In this embodiment of the present application, when determining the quantity of the welding points included in the cell detection region and the quantity of the pixels corresponding to each welding point, the control device may further calculate the area of the welding mark detection region according to the quantity and area of the pixels corresponding to each spot. Then, the control device may compare the quantity of the welding points included in the welding mark detection region with the quantity of welding points included in a preset welding mark region, and if the quantities of the welding points included in the two regions are consistent, determines that the first cell picture does not have a welding mark defect; or if the quantities of the welding points included in the two regions are inconsistent, determining that the first cell picture has a welding mark defect. Moreover, the control device may compare the area of the welding mark detection region with the area of the preset welding mark region, and if the welding mark areas of the two regions are consistent, determine that the first cell picture does not have a welding mark defect; or if the welding mark areas of the two regions are inconsistent, determine that the first cell picture has a welding mark defect.

The embodiments of the present application provide a method for detecting a welding mark defect. In addition, a welding mark detection region is quickly positioned, and detection is implemented by using a trained deep learning model, so that detection accuracy and efficiency can be improved to some extent.

In an embodiment, detection of a tab eversion defect, a tab folding defect, and a welding mark defect is implemented in the foregoing embodiments of FIG. 2 to FIG. 25, and defect detection is performed during pasting of a blue adhesive for the to-be-detected cell in each embodiment. An embodiment of the present application further provides a defect detection method for a cell after adhesive pasting, and detection is performed on blue adhesive presence or absence, a blue adhesive offset, a blue adhesive tab exposure, and cell polarity reversion after adhesive pasting.

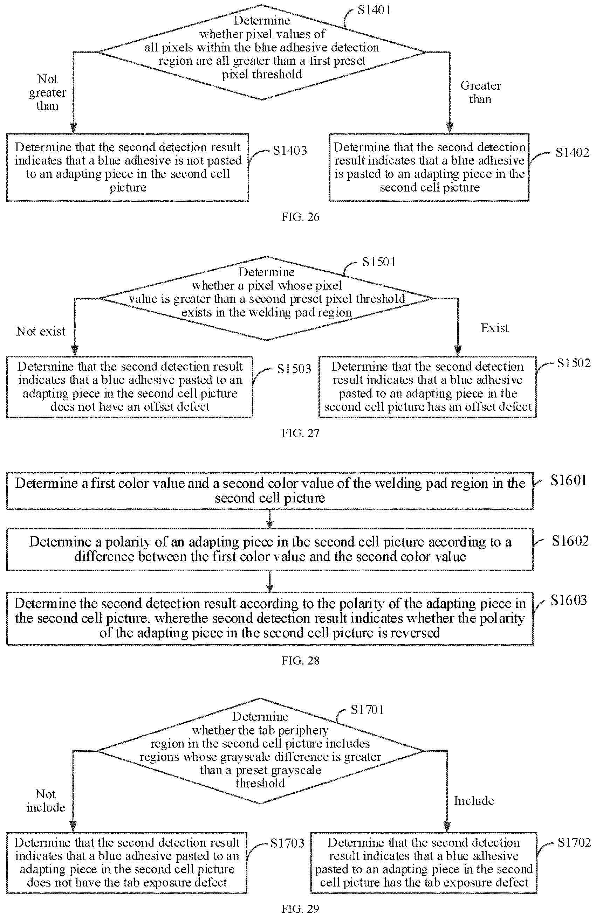

In an embodiment, when detection of a blue adhesive presence or absence defect is performed, the blue adhesive detection region includes an adhesive pasting region, and the second defect includes the blue adhesive presence or absence defect. In this scenario, a method for performing defect detection based on an adhesive pasting region is provided. That is, as shown in FIG. 26, the foregoing S1002 of "performing detection of a second defect in the blue adhesive detection region in the second cell picture, to obtain the second detection result" includes:
S1401: Determine whether pixel values of all pixels within the blue adhesive detection region are all greater than a first preset pixel threshold. If the pixel values of all the pixels within the blue adhesive detection region are all greater than the first preset pixel threshold, step S1402 is performed. If none of the pixel values of all the pixels within the blue adhesive detection region is greater than the first preset pixel threshold, step S1403 is performed.
S1402: Determine that the second detection result indicates that a blue adhesive is pasted to an adapting piece in the second cell picture.
S1403: Determine that the second detection result indicates that a blue adhesive is not pasted to an adapting piece in the second cell picture.

The first preset pixel threshold is a grayscale value of a corresponding pixel of the blue adhesive in the picture, and may be determined in advance according to a feature of the blue adhesive.

In this embodiment of the present application, the control device may determine the first preset pixel threshold in advance according to the feature of the blue adhesive, and compare a grayscale value of each pixel in a blue adhesive detection region with the first preset pixel threshold during specific detection; and determine, when the pixel values of all the pixels in the blue adhesive detection region are all greater than the first preset pixel threshold, indicating that the second cell picture has a blue adhesive, that the second detection result indicates that a blue adhesive is pasted to an adapting piece in the second cell picture; or determine, when none of the pixel values of all the pixels in the blue adhesive detection region is greater than the first preset pixel threshold, indicating that the second cell picture does not have a blue adhesive, that the second detection result indicates that a blue adhesive is not pasted to an adapting piece in the second cell picture.

This embodiment of the present application provides detection of a blue adhesive presence or absence defect on the welded cell, and can improve detection accuracy and efficiency to some extent by quickly positioning the blue adhesive detection region.

In an embodiment, when detection of a blue adhesive defect is performed, the blue adhesive detection region includes a welding pad region, and the second defect includes the blue adhesive offset defect. In this scenario, a method for performing defect detection based on a welding pad region is provided. That is, as shown in FIG. 27, the foregoing S1002 of "performing detection of a second defect in the blue adhesive detection region in the second cell picture, to obtain the second detection result" includes:
S1501: Determine whether a pixel whose pixel value is greater than a second preset pixel threshold exists in the welding pad region. If a pixel whose pixel value is greater than the second preset pixel threshold exists in the welding pad region, step S1502 is performed. If a pixel whose pixel value is greater than the second preset pixel threshold does not exist in the welding pad region, step S1503 is performed.
S1502: Determine that the second detection result indicates that a blue adhesive pasted to an adapting piece in the second cell picture has an offset defect.
S1503: Determine that the second detection result indicates that a blue adhesive pasted to an adapting piece in the second cell picture does not have an offset defect.

The first preset pixel threshold is a grayscale value of a corresponding pixel of the blue adhesive in the picture, and may be determined in advance according to a feature of the blue adhesive. For a welding pad region, refer to an ROI6 region shown in FIG. 17.

In this embodiment of the present application, the control device may determine the second preset pixel threshold in advance according to the feature of the blue adhesive, and compare a grayscale value of each pixel in a blue adhesive detection region with the second preset pixel threshold during specific detection; and determine, when it is determined that a pixel whose pixel value is greater than the second preset pixel threshold exists in the blue adhesive detection region, indicating that the blue adhesive exists in the welding pad region on the adapting piece in the second cell picture, that the second detection result indicates that the blue adhesive pasted on the adapting piece in the second cell picture has an offset defect and is offset to the welding pad region; or determine, when it is determined that a pixel whose pixel value is greater than the second preset pixel threshold does not exist in the blue adhesive detection region, indicating that the blue adhesive pasted on the second cell picture does not have an offset defect, that the second detection result indicates that the blue adhesive pasted on the adapting piece in the second cell picture does not have an offset defect.

This embodiment of the present application provides detection of a blue adhesive offset defect on the welded cell, and in particular, detection of whether a blue adhesive offset exists in the welding pad region, which can improve cell detection safety to some extent.

In an embodiment, when detection of the polarity defect of the welding pad is performed, the blue adhesive detection region includes a welding pad region, and the second defect includes the adapting piece polarity defect. In this scenario, a method for performing defect detection based on a welding pad region is provided. That is, as shown in FIG. 28, the foregoing S1002 of "performing detection of a second defect in the blue adhesive detection region, to obtain the second detection result" includes:
S1601: Determine a first color value and a second color value of the welding pad region in the second cell picture.
S1602: Determine a polarity of an adapting piece in the second cell picture according to a difference between the first color value and the second color value.
S1603: Determine the second detection result according to the polarity of the adapting piece in the second cell picture, where the second detection result indicates whether the polarity of the adapting piece in the second cell picture is reversed.

The first color value is a color value of red, that is, an R value in RGB values. The second color value is a blue color value, that is, a B value in the RGB values.

In this embodiment of the present application, when specifically detecting the welding pad polarity, the control device needs to convert the second cell picture into a color picture, extract an R value and a B value according to RGB values of each pixel in the color picture, calculate a difference between the R value and the B value, and then determine the polarity of the adapting piece in the second cell picture according to the difference. For example, if the difference is positive, it indicates that the welding pad of the adapting piece is a welding pad made of copper; or if the difference is negative, it indicates that the welding pad of the adapting piece is a welding pad made of aluminum. When the polarity of the adapting piece in the second cell picture is determined, whether the polarity of the adapting piece in the current second cell picture is reversed may be further determined according to a preset polarity of the to-be-detected cell, that is, an original polarity of the to-be-detected cell. For example, if the polarity of the adapting piece in the second cell picture is consistent with the preset polarity of the to-be-detected cell, it is determined that the polarity of the adapting piece in the second cell picture is not reversed; or if the polarity of the adapting piece in the second cell picture is inconsistent with the preset polarity of the to-be-detected cell, it is determined that the polarity of the adapting piece in the second cell picture is reversed.

This embodiment of the present application provides detection of a welding pad polarity defect on the welded cell, and in particular, detection of whether the polarity of the welding pad has a reversed polarity defect, which can improve cell detection safety to some extent.

In an embodiment, when detection of the polarity defect of the welding pad is performed, the blue adhesive detection region includes a tab periphery region, and the second defect includes the tab exposure defect. In this scenario, a method for performing defect detection based on a tab periphery region is provided. That is, as shown in FIG. 29, the foregoing S1002 of "performing detection of a second defect in the blue adhesive detection region, to obtain the second detection result" includes:
S1701: Determine whether the tab periphery region in the second cell picture includes regions whose grayscale difference is greater than a preset grayscale threshold. If the tab periphery region in the second cell picture includes regions whose grayscale difference is greater than the preset grayscale threshold, step S1702 is performed. If the tab periphery region in the second cell picture does not include regions whose grayscale difference is greater than the preset grayscale threshold, step S1703 is performed.
S1702: Determine that the second detection result indicates that a blue adhesive pasted to an adapting piece in the second cell picture has the tab exposure defect.
S1703: Determine that the second detection result indicates that a blue adhesive pasted to an adapting piece in the second cell picture does not have the tab exposure defect.

The preset grayscale threshold is a grayscale value of a pixel corresponding to a transition region between the blue adhesive and a background, and may be determined in advance according to a feature of the pixel in the transition region between the blue adhesive and the background. It should be noted that the tab periphery region may include a plurality of tab exposure detection regions, and each tab exposure detection region may be disposed at a position around the tab on the adapting piece. For example, referring to the schematic diagram shown in FIG. 17, ROI8 represents a tab exposure detection region, ROI9 represents a tab exposure detection region, ROI10 represents a tab exposure detection region, ROI11 represents a tab exposure detection region, ROI12 represents a tab exposure detection region, ROI13 represents a tab exposure detection region, ROI14 represents a tab exposure detection region, and ROI15 represents a tab exposure detection region. For determining each of the foregoing tab exposure detection regions, refer to the detection region determining method in the foregoing embodiments. That is, a size of each of the tab exposure detection regions is determined according to size parameters of a tab of a to-be-detected cell, size parameters of an adapting piece of the to-be-detected cell, and size parameters of a welding mark of the adapting piece of the to-be-detected cell, and a position of each of the tab exposure detection regions is determined based on the size of each of the tab exposure detection regions and with reference to related parameters of the to-be-detected cell. For a specific method, refer to the foregoing method. Details are not described herein again.

In this embodiment of the present application, the control device may determine a preset grayscale threshold in advance according to a feature of a pixel in a transition region between the blue adhesive and the background; and during specific detection, first calculate a grayscale difference between adjacent pixels in the tab periphery region or calculate a grayscale difference between pixels in adjacent regions in the tab periphery region, then compare the grayscale difference with the preset grayscale threshold, and determine, when it is determined that the tab periphery region includes pixels or regions whose grayscale difference is greater than the preset grayscale threshold, indicating that the blue adhesive on the second cell picture fails to completely cover the tab, that is, a tab exposure defect exists, that the second detection result indicates that the blue adhesive pasted on the adapting piece in the second cell picture has a tab exposure defect; or determine, when it is determined that the tab periphery region does not include pixels or regions whose grayscale difference is greater than the preset grayscale threshold, indicating that the blue adhesive on the second cell picture completely covers the tab, that the second detection result indicates that the blue adhesive pasted on the adapting piece in the second cell picture does not have a tab exposure defect. or

This embodiment of the present application provides detection of a tab exposure defect on the welded cell, which can improve cell detection comprehensiveness to some extent.

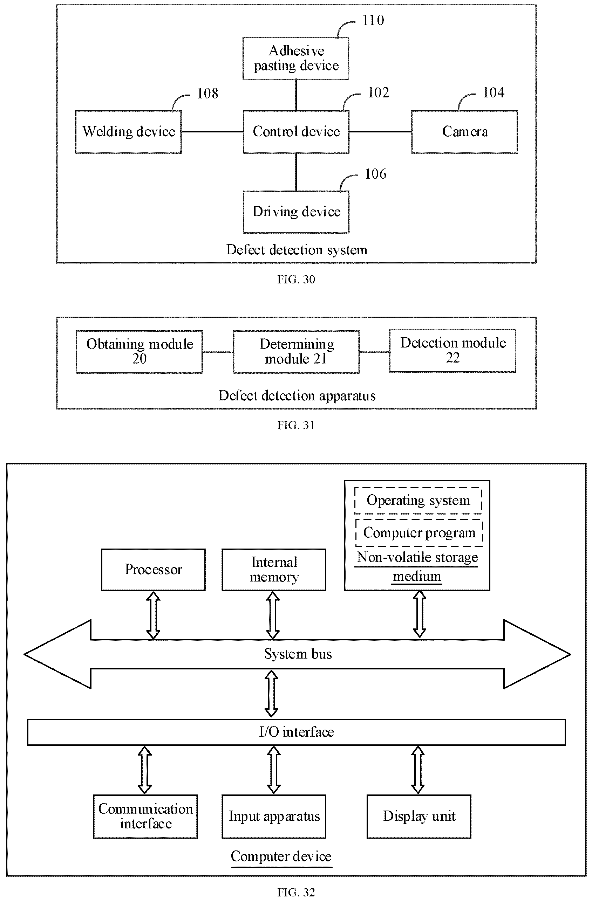

Based on the defect detection method according to any one of the foregoing embodiments, the present application further provides a defect detection system. As shown in a block diagram of the system in FIG. 30, The defect detection system includes a control device 102, a camera 104, a driving device 106, a welding device 108, and an adhesive pasting device 110. The control device 102 is separately connected to the camera 104, the driving device 106, the welding device 108, and the adhesive pasting device 110. The control device 102 is configured to perform the defect detection method according to any one of the foregoing embodiments of FIG. 2 to FIG. 29.

According to the defect detection method in the embodiments of the present application, a photographing trigger signal before adhesive pasting is newly added at an original photographing position after adhesive pasting, and a picture is taken before adhesive pasting. After photographing is completed, a cell enters an adhesive pasting station, and returns to the photographing position after adhesive pasting. The control device sends the photographing trigger signal to the camera, so as to take a picture after adhesive pasting. In this procedure, a cell for photographing "before adhesive pasting" and a cell for photographing "after adhesive pasting" are the same cell. A visual detection system after ultrasonic welding includes two processing procedures: "before adhesive pasting" + "after adhesive pasting". A corresponding processing procedure before adhesive pasting is entered after a signal before adhesive pasting is received, results are temporarily stored after the processing is completed, and a processing procedure after adhesive pasting is entered after a signal after adhesive pasting is received, results before adhesive pasting are collected after the processing is completed, and a total result is sent to the control device. A master device performs waste discharging on the cell according to the total result determined by the camera. In addition, photographing before adhesive pasting and defect detection consume a total of approximately 150 ms, which does not affect a cell production beat. That is, after performing the step of "performing defect detection on the detection region, to obtain a first detection result", the control device determines an operation on the to-be-detected cell by analyzing the first detection result. For example, if the first detection result indicates that a tab eversion defect, a tab folding defect, a welding mark defect, or a blue adhesive defect is detected, NG waste discharging is performed on the to-be-detected cell; or if the first detection result indicates that a tab eversion defect, a tab folding defect, a welding mark defect, or a blue adhesive defect is not detected, a subsequent process continues to be performed on the to-be-detected cell. The method can improve accuracy of cell detection, thereby improving production quality of the cell.

It should be understood that, although the steps are displayed sequentially according to the instructions of the arrows in the flowcharts of the embodiments, these steps are not necessarily performed sequentially according to the sequence instructed by the arrows. Unless otherwise explicitly specified in the present application, execution of the steps is not strictly limited, and the steps may be performed in other sequences. Moreover, at least some of the steps in the flowcharts of the embodiments may include a plurality of steps or a plurality of stages. These steps or stages are not necessarily performed at the same moment but may be performed at different moments. These steps or stages are not necessarily sequentially performed, but may be performed alternately with other steps or at least some of steps or stages of other steps.

Based on the same inventive concept, the embodiments of the present application further provide a defect detection apparatus configured to implement the foregoing related defect detection method. An implementation solution to the problem provided by the apparatus is similar to the implementation solution recorded in the foregoing method. Therefore, for specific limitations in one or more embodiments of the defect detection apparatus provided below, reference may be made to the limitations on the defect detection method above. Details are not described herein again.

In an embodiment, as shown in FIG. 31, a defect detection apparatus is provided, including:
an obtaining module 20, configured to obtain a first cell picture of a to-be-detected cell before adhesive pasting and a second cell picture of the to-be-detected cell after adhesive pasting, where the first cell picture includes a tab of the to-be-detected cell;
a determining module 21, configured to: determine a cell detection region in the first cell picture and a blue adhesive detection region in the second cell picture according to a type of a to-be-detected defect; and
a detection module 22, configured to perform defect detection on the cell detection region and the blue adhesive detection region to obtain a detection result.

The modules in the foregoing defect detection apparatus may be implemented entirely or partially by software, hardware, or a combination thereof. The foregoing modules may be built in or independent of a processor of a computer device in the form of hardware, or may be stored in a memory of the computer device in the form of software, so that the processor invokes and executes operations corresponding to the foregoing modules.

In an embodiment, a computer device is provided. The computer device may be a terminal, and an internal structure diagram thereof may be shown in FIG. 32. The computer device includes a processor, a memory, a communication interface, a display screen, and an input apparatus that are connected by using a system bus. The processor of the computer device is configured to provide computation and control abilities. The memory of the computer device includes a non-volatile storage medium and an internal memory. The non-volatile storage medium stores an operating system and a computer program. The internal memory provides an environment for execution of the operating system and the computer program in the non-volatile storage medium. The communication interface of the computer device is configured to communicate with an external terminal in a wired or a wireless manner, and the wireless manner can be implemented by using Wi-Fi, a mobile cellular network, near field communication (NFC), or other technologies. The computer program, when executed by a processor, implements a defect detection method. The display screen of the computer device may be a liquid crystal display screen or an electronic ink display screen. The input apparatus of the computer device may be a touch layer covering the display screen, or may be a button, a trackball, or a touchpad disposed on a housing of the computer device, or may be an external keyboard, a touchpad, a mouse or the like.

A person skilled in the art may understand that, the structure shown in FIG. 32 is merely a block diagram of a partial structure related to a solution in the present application, and does not constitute a limitation to the computer device to which the solution in the present application is applied. Specifically, the computer device may include more components or fewer components than those shown in the figure, or some components may be combined, or a different component deployment may be used.

In an embodiment, a computer device is provided, including a memory and a processor. The memory stores a computer program, and the processor, when executing the computer program, implements the following steps:
obtaining a first cell picture of a to-be-detected cell before adhesive pasting and a second cell picture of the to-be-detected cell after adhesive pasting, where the first cell picture includes a tab of the to-be-detected cell;
determining a cell detection region in the first cell picture and a blue adhesive detection region in the second cell picture according to a type of a to-be-detected defect; and
performing defect detection on the cell detection region and the blue adhesive detection region to obtain a detection result.

An implementation principle and a technical effect of the computer device provided in the foregoing embodiments are similar to those in the foregoing method embodiments, and details are not described herein again.

In an embodiment, a computer-readable storage medium is provided, having a computer program stored therein. The computer program, when executed by a processor, implements the following steps:
obtaining a first cell picture of a to-be-detected cell before adhesive pasting and a second cell picture of the to-be-detected cell after adhesive pasting, where the first cell picture includes a tab of the to-be-detected cell;
determining a cell detection region in the first cell picture and a blue adhesive detection region in the second cell picture according to a type of a to-be-detected defect; and
performing defect detection on the cell detection region and the blue adhesive detection region to obtain a detection result.

An implementation principle and a technical effect of the computer-readable storage medium provided in the foregoing embodiments are similar to those in the foregoing method embodiments, and details are not described herein again.

A person of ordinary skill in the art may understand that all or some of the procedures of the methods of the foregoing embodiments may be implemented by a computer program instructing relevant hardware. The computer program may be stored in a non-volatile computer-readable storage medium. When the computer program is executed, the procedures of the embodiments of the foregoing methods may be included. Any reference to a memory, a database, or another medium used in the various embodiments provided in the present application may include at least one of a non-volatile or volatile memory. The non-volatile memory can include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), an external cache memory, or the like. As an illustration rather than a limitation, the RAM may be in a plurality of forms, such as a static random access memory (SRAM) or a dynamic random access memory (DRAM). The databases involved in the various embodiments provided by the present application may include at least one of a relational database and a non-relational database. The non-relational database may include, but is not limited to, a block-chain-based distributed database. The processors involved in embodiments provided by the present application may be a general-purpose processor, a central processing unit, a graphics processor, a digital signal processor, a programmable logic device, a quantum computing-based data processing logic device, and the like. This is not limited.

The technical features in the foregoing embodiments may be randomly combined. For simplicity of description, all possible combinations of the technical features in the foregoing embodiments are not described. However, it should be considered that these combinations of technical features fall within the scope recorded in the specification provided that these combinations of technical features do not have any conflict.

The foregoing embodiments only describe several implementations of the present application, and their description is specific and detailed, but cannot therefore be understood as a limitation to the scope of the claims of the present application. It should be noted that for persons of ordinary skill in the art, several variations and improvements may further be made without departing from the concept of the present application. These variations and improvements should also be deemed as falling within the scope of protection of the present application. Therefore, the scope of protection of the present application shall be subject to the appended claims.

## Claims

1. A defect detection method, comprising:
obtaining a first cell picture of a to-be-detected cell before adhesive pasting and a second cell picture of the to-be-detected cell after adhesive pasting, wherein the first cell picture comprises a tab of the to-be-detected cell;
determining a size of a cell detection region in the first cell picture according to a type of a to-be-detected defect and related parameters of the to-be-detected cell, and determining a position of the cell detection region in the first cell picture according to the size of the cell detection region and the related parameters of the to-be-detected cell;
determining a size of a blue adhesive detection region in the second cell picture according to the type of the to-be-detected defect and the related parameters of the to-be-detected cell, and determining a position of the blue adhesive detection region in the second cell picture according to the size of the blue adhesive detection region and the related parameters of the to-be-detected cell; and
performing defect detection on the cell detection region and the blue adhesive detection region to obtain a detection result.

2. The method according to claim 1, wherein the determining a size of a cell detection region in the first cell picture according to a type of a to-be-detected defect and related parameters of the to-be-detected cell comprises:
determining that the cell detection region is an eversion region if the type of the to-be-detected defect is a tab eversion defect, and determining a size of the eversion region according to size parameters of the tab of the to-be-detected cell, size parameters of an adapting piece of the to-be-detected cell, and size parameters of a welding mark of the adapting piece of the to-be-detected cell;
determining that the cell detection region is a folding region if the type of the to-be-detected defect is a tab folding defect, and determining a size of the folding region according to size parameters of the tab of the to-be-detected cell and size parameters of an adapting piece of the to-be-detected cell; or
determining that the cell detection region is a welding mark detection region if the type of the detection defect is a welding mark defect, and determining a size of the welding mark detection region according to size parameters of a welding mark on an adapting piece of the to-be-detected cell.

3. The method according to claim 2, wherein the eversion region comprises a first detection region and a second detection region, and the determining a size of the eversion region according to size parameters of the tab of the to-be-detected cell, size parameters of an adapting piece of the to-be-detected cell, and size parameters of a welding mark of the adapting piece of the to-be-detected cell comprises:
determining a size of the first detection region according to the size parameters of the tab of the to-be-detected cell and the size parameters of the adapting piece; and
determining a size of the second detection region according to the size parameters of the welding mark of the adapting piece of the to-be-detected cell.

4. The method according to claim 3, wherein the determining a size of the first detection region according to the size parameters of the tab of the to-be-detected cell and the size parameters of the adapting piece comprises:
determining the size of the first detection region according to a length of the tab of the to-be-detected cell and a width of a gap between the adapting piece and the to-be-detected cell.

5. The method according to claim 3, wherein the determining a size of the second detection region according to the size parameters of the welding mark of the adapting piece of the to-be-detected cell comprises:
determining the size of the second detection region according to a length and a width of the welding mark of the adapting piece of the to-be-detected cell.

6. The method according to claim 2, wherein the determining a size of the folding region according to size parameters of the tab of the to-be-detected cell and size parameters of an adapting piece of the to-be-detected cell comprises:
determining the size of the folding region according to a length of the tab of the to-be-detected cell and a width of a gap between the adapting piece and the to-be-detected cell.

7. The method according to any one of claims 1 to 6, wherein the determining a position of the cell detection region in the first cell picture according to the size of the cell detection region and the related parameters of the to-be-detected cell comprises:
positioning the cell detection region in the first cell picture according to a position of an intersection point of a first side and a second side and with reference to the size of the cell detection region, to determine the position of the cell detection region in the first cell picture, wherein the first side and the second side are two intersecting sides of the adapting piece in the first cell picture.

8. The method according to claim 1, wherein the determining a size of a blue adhesive detection region in the second cell picture according to the type of the to-be-detected defect and the related parameters of the to-be-detected cell comprises:
determining that the blue adhesive detection region is an adhesive pasting region if the type of the to-be-detected defect is a blue adhesive presence or absence defect, and determining a size of the adhesive pasting region according to size parameters of a welding mark of an adapting piece of the to-be-detected cell;
determining that the blue adhesive detection region is a welding pad region if the type of the to-be-detected defect is a blue adhesive offset defect or an adapting piece polarity defect, and determining a size of the welding pad region according to size parameters of a welding pad of an adapting piece of the to-be-detected cell; or
determining that the blue adhesive detection region is a tab periphery region if the type of the to-be-detected defect is a tab exposure defect, and determining a size of the tab periphery region according to size parameters of a welding pad of an adapting piece of the to-be-detected cell and a position of the welding pad.

9. The method according to claim 8, wherein the determining a size of the adhesive pasting region according to size parameters of a welding mark of an adapting piece of the to-be-detected cell comprises:
determining the size of the adhesive pasting region according to a length of a region in which the welding mark of the adapting piece is located and a width of the region in which the welding mark of the adapting piece is located.

10. The method according to claim 9, wherein the blue adhesive detection region comprises the adhesive pasting region, and the determining a position of the blue adhesive detection region in the second cell picture according to the size of the blue adhesive detection region and the related parameters of the to-be-detected cell comprises:
positioning the adhesive pasting region in the second cell picture according to a position of an intersection point of a third side and a fourth side and with reference to the size of the adhesive pasting region, to determine a position of the adhesive pasting region in the second cell picture, wherein the third side and the fourth side are two intersecting sides of the adapting piece in the second cell picture;
or determining a position of the adhesive pasting region in the second cell picture according to a position of the region in which the welding mark of the to-be-detected cell is located.

11. The method according to claim 8, wherein the determining a size of the welding pad region according to size parameters of a welding pad of an adapting piece of the to-be-detected cell comprises:
determining a protrusion region or a pit region of the welding pad of the adapting piece of the to-be-detected cell; and
determining the size of the welding pad region according to a diameter of the protrusion region or the pit region if the protrusion region or the pit region is a circular region; or
determining the size of the welding pad region according to a length of the protrusion region or the pit region and a width of the protrusion region or the pit region if the protrusion region or the pit region is a rectangular region.

12. The method according to claim 8, wherein the determining a size of the welding pad region according to size parameters of a welding pad of an adapting piece of the to-be-detected cell comprises:
determining the size of the welding pad region according to a length of a region in which the welding pad of the adapting piece of the to-be-detected cell is located and a width of the region in which the welding pad of the adapting piece is located;
or determining the size of the welding pad region according to size parameters of a protrusion region or a pit region of the welding pad of the adapting piece.

13. The method according to claim 11 or 12, wherein the determining a position of the blue adhesive detection region in the second cell picture according to the size of the blue adhesive detection region and the related parameters of the to-be-detected cell comprises:
positioning the welding pad region in the second cell picture according to a position of the welding pad of the adapting piece of the to-be-detected cell and with reference to the size of the welding pad region, to determine a position of the welding pad region in the second cell picture.

14. The method according to claim 8, wherein the determining a size of the tab periphery region according to size parameters of a welding pad of an adapting piece of the to-be-detected cell and a position of the welding pad comprises:
determining the size of the tab periphery region according to a length of a region in which the welding pad of the adapting piece of the to-be-detected cell is located and a distance between the welding pad and the to-be-detected cell.

15. The method according to claim 14, wherein the tab periphery region comprises a first periphery region of a first tab, a second periphery region of the first tab, a first periphery region of a second tab, and a second periphery region of the second tab, and the determining the size of the tab periphery region according to a length of a region in which the welding pad of the adapting piece of the to-be-detected cell is located and a distance between the welding pad and the to-be-detected cell comprises:
determining a length of the first periphery region of the first tab, a length of the second periphery region of the first tab, a length of the first periphery region of the second tab, and a length of the second periphery region of the second tab according to the length of the region in which the welding pad of the adapting piece of the to-be-detected cell is located;
determining a width of the first periphery region of the first tab and a width of the second periphery region of the first tab according to a first distance between the welding pad and the to-be-detected cell; and
determining a width of the first periphery region of the second tab and a width of the second periphery region of the second tab according to a second distance between the welding pad and the to-be-detected cell.

16. The method according to claim 15, wherein the determining a position of the blue adhesive detection region in the second cell picture according to the size of the blue adhesive detection region and the related parameters of the to-be-detected cell comprises:
positioning the first periphery region of the first tab in the second cell picture according to a position of an intersection point of a fifth side and a sixth side and with reference to a size of the first periphery region of the first tab, to determine a position of the first periphery region of the first tab, wherein the fifth side and the sixth side are two intersecting sides of the adapting piece in the second cell picture;
determining a position of the second periphery region of the first tab according to a length of a first blue adhesive in the to-be-detected cell and with reference to the position of the first periphery region of the first tab;
positioning the first periphery region of the second tab in the second cell picture according to a position of an intersection point of a seventh side and an eighth side and with reference to a size of the first periphery region of the second tab, to determine a position of the first periphery region of the second tab, wherein the seventh side and the eighth side are two intersecting sides of the adapting piece in the second cell picture; and
determining a position of the second periphery region of the second tab according to a length of a second blue adhesive in the to-be-detected cell and with reference to the position of the first periphery region of the second tab.

17. The method according to claim 1, wherein the detection result comprises a first detection result and a second detection result, and the performing defect detection on the cell detection region and the blue adhesive detection region to obtain a detection result comprises:
performing detection of a first defect in the cell detection region, to obtain the first detection result, wherein the first defect comprises one of a tab eversion defect, a tab folding defect, a tab cracking defect, and a welding mark defect; and
performing detection of a second defect in the blue adhesive detection region, to obtain the second detection result, wherein the second defect comprises one of a blue adhesive presence or absence defect, a blue adhesive offset defect, an adapting piece polarity defect, and a tab exposure defect.

18. The method according to claim 17, wherein the cell detection region comprises a tab folding detection region, the tab folding detection region comprises an eversion region, the eversion region comprises a first cell detection region and a second cell detection region, and the performing detection of a first defect in the cell detection region, to obtain the first detection result comprises:
performing binarization processing on a picture of the first cell detection region and a picture of the second cell detection region, to obtain a processed first processing picture and a processed second processing picture;
performing detection of a first type of defect in the tab eversion defect on the first processing picture, to obtain an intermediate detection result; and
determining, if the intermediate detection result indicates that the first type of defect is detected, that the first detection result indicates that the to-be-detected cell has the first type of defect; or
performing detection of a second type of defect in the tab eversion defect on the second processing picture if the intermediate detection result indicates that the first type of defect is not detected, to obtain the first detection result.

19. The method according to claim 18, wherein the performing detection of a first type of defect in the tab eversion defect on the first processing picture, to obtain an intermediate detection result comprises: determining whether a cell detection region of the first processing picture comprises a pixel whose grayscale value is within a first grayscale threshold range; and determining that the intermediate detection result indicates that the first type of defect is detected if the cell detection region comprises a pixel whose grayscale value is within the first grayscale threshold range; or determining that the intermediate detection result indicates that the first type of defect is not detected if the cell detection region does not comprise a pixel whose grayscale value is within the first grayscale threshold range.

20. The method according to claim 18, wherein the performing detection of a second type of defect in the tab eversion defect on the second processing picture, to obtain the first detection result comprises:
determining whether a cell detection region of the second processing picture comprises a pixel whose grayscale value is within a second grayscale threshold range; and determining that the first detection result indicates that the to-be-detected cell has the second type of defect if the cell detection region comprises a pixel whose grayscale value is within the second grayscale threshold range; or determining that the first detection result indicates that the to-be-detected cell does not have the second type of defect if the cell detection region does not comprise a pixel whose grayscale value is within the second grayscale threshold range.

21. The method according to claim 17, wherein the cell detection region comprises a tab folding detection region, the tab folding detection region comprises a folding region, and the performing detection of a first defect in the cell detection region, to obtain the first detection result comprises:
performing binarization processing on a picture of the folding region, to obtain a processed third processing picture; and
performing detection of the tab folding defect on the third processing picture, to obtain the first detection result.

22. The method according to claim 17, wherein the cell detection region comprises a tab blocking detection region, and the performing detection of a first defect in the cell detection region, to obtain the first detection result comprises:
inputting a picture of the tab blocking detection region into a preset detection model to detect the tab cracking defect, to obtain the first detection result, wherein the first detection result comprises a tab cracking confidence degree.

23. The method according to claim 17, wherein the cell detection region comprises a welding mark detection region, and the performing detection of a first defect in the cell detection region, to obtain the first detection result comprises:
performing detection of spots in the cell detection region, to determine the spots in the cell detection region; and
performing detection of the welding mark defect on the cell detection region according to a quantity and an area of pixels corresponding to each of the spots, to obtain the first detection result, wherein the first detection result comprises a quantity of welding points comprised in the cell detection region and a welding mark area.

24. The method according to claim 17, wherein the blue adhesive detection region comprises an adhesive pasting region, the second defect comprises the blue adhesive presence or absence defect, and the performing detection of a second defect in the blue adhesive detection region, to obtain the second detection result comprises:
determining whether pixel values of all pixels within the blue adhesive detection region are all greater than a first preset pixel threshold; and
determining, if the pixel values of all the pixels in the blue adhesive detection region are all greater than the first preset pixel threshold, that the second detection result indicates that a blue adhesive is pasted to an adapting piece in the second cell picture; or
determining, if none of the pixel values of all the pixels in the blue adhesive detection region is greater than the first preset pixel threshold, that the second detection result indicates that a blue adhesive is not pasted to an adapting piece in the second cell picture.

25. The method according to claim 17, wherein the blue adhesive detection region comprises a welding pad region, the second defect comprises the blue adhesive offset defect, and the performing detection of a second defect in the blue adhesive detection region, to obtain the second detection result comprises:
determining whether a pixel whose pixel value is greater than a second preset pixel threshold exists in the welding pad region; and
determining, if a pixel whose pixel value is greater than the second preset pixel threshold exists in the welding pad region, that the second detection result indicates that a blue adhesive pasted to an adapting piece in the second cell picture has an offset defect; or
determining, if a pixel whose pixel value is greater than the second preset pixel threshold does not exist in the welding pad region, that the second detection result indicates that a blue adhesive pasted to an adapting piece in the second cell picture does not have an offset defect.

26. The method according to claim 17, wherein the blue adhesive detection region comprises a welding pad region, the second defect comprises the adapting piece polarity defect, and the performing detection of a second defect in the blue adhesive detection region, to obtain the second detection result comprises:
determining a first color value and a second color value of the welding pad region in the second cell picture;
determining a polarity of an adapting piece in the second cell picture according to a difference between the first color value and the second color value; and
determining the second detection result according to the polarity of the adapting piece in the second cell picture, wherein the second detection result indicates whether the polarity of the adapting piece in the second cell picture is reversed.

27. The method according to claim 17, wherein the blue adhesive detection region comprises a tab periphery region, the second defect comprises the tab exposure defect, and the performing detection of a second defect in the blue adhesive detection region, to obtain the second detection result comprises:
determining whether the tab periphery region in the second cell picture comprises pixels or regions whose grayscale difference is greater than a preset grayscale threshold; and
determining, if the tab periphery region in the second cell picture comprises pixels or regions whose grayscale difference is greater than the preset grayscale threshold, that the second detection result indicates that a blue adhesive pasted to an adapting piece in the second cell picture has the tab exposure defect; or
determining, if the tab periphery region in the second cell picture does not comprise pixels or regions whose grayscale difference is greater than the preset grayscale threshold, that the second detection result indicates that a blue adhesive pasted to an adapting piece in the second cell picture does not have the tab exposure defect.

28. A defect detection system, comprising: a control device, a camera, a driving device, a welding device, and an adhesive pasting device, wherein the control device is separately connected to the camera, the driving device, the welding device, and the adhesive pasting device; and
the control device is configured to perform the defect detection method according to any one of claims 1 to 27.

29. A defect detection apparatus, comprising:
an obtaining module, configured to obtain a first cell picture of a to-be-detected cell before adhesive pasting and a second cell picture of the to-be-detected cell after adhesive pasting, wherein the first cell picture comprises a tab of the cell;
a determining module, configured to determine a size of a cell detection region in the first cell picture according to a type of a to-be-detected defect and related parameters of the to-be-detected cell, and determine a position of the cell detection region in the first cell picture according to the size of the cell detection region and the related parameters of the to-be-detected cell; and determine a size of a blue adhesive detection region in the second cell picture according to the type of the to-be-detected defect and the related parameters of the to-be-detected cell, and determine a position of the blue adhesive detection region in the second cell picture according to the size of the blue adhesive detection region and the related parameters of the to-be-detected cell; and
a detection module, configured to perform defect detection on the cell detection region and the blue adhesive detection region to obtain a detection result.

30. A computer device, comprising a memory and a processor, wherein the memory has a computer program stored therein, and the processor, when executing the computer program, implements steps of the method according to any one of claims 1 to 27.

31. A computer-readable storage medium, having a computer program stored therein, wherein the computer program, when executed by a processor, implements steps of the method according to any one of claims 1 to 27.
